# EUROPEAN PATENT APPLICATION

(11) **EP 4 641 863 A1**
(43) Date of publication of application: **29.10.2025**
(21) Application number: 23941963.3
(22) Date of filing: 21.06.2023
(51) Int. Cl.: H02J 3/32, H01M 10/04

(54) **ENERGY STORAGE DEVICE AND ENERGY STORAGE SYSTEM**

(71) Applicant: Contemporary Amperex Technology Co., Limited, Ningde, Fujian 352100 (CN)
(72) Inventor: XU, Jinmei, Ningde, Fujian 352100 (CN); HE, Shuangjiang, Ningde, Fujian 352100 (CN); LI, Jiaxin, Ningde, Fujian 352100 (CN); WU, Kai, Ningde, Fujian 352100 (CN); LI, Zhonghong, Ningde, Fujian 352100 (CN); ZHANG, Xuefang, Ningde, Fujian 352100 (CN); LUO, Guangsheng, Ningde, Fujian 352100 (CN)
(74) Representative: Gong, Jinping
(86) International application number: PCT/CN2023/101942
(87) International publication number: WO 2024/259691

(57) **Abstract**

Embodiments of this application provide an energy storage apparatus and an energy storage system. The energy storage apparatus is configured to be electrically connected to a power conversion system, where the power conversion system is capable of cooperating with M energy storage apparatuses, a rated output power of the power conversion system is P, an energy of the energy storage apparatus is Q, a duration for the energy storage apparatus to discharge from a fully charged state to a fully discharged state is A, satisfying: 0.7 ≤ P/(M * Q/A) ≤ 0.99. With P/(M * Q/A) ≤ 0.99, it is ensured that the power of all energy storage apparatuses cooperating with the power conversion system maintains sufficient margin relative to the power of the power conversion system, eliminating the need for capacity supplementation of the energy storage apparatus over a long period, achieving long-term reliability of the energy storage apparatus. With P/(M * Q/A) ≥ 0.7, it is ensured that the margin of the power of the energy storage apparatus relative to the power of the power conversion system is not excessive, reducing power waste and improving the economic efficiency of the energy storage apparatus. Thus, power matching between the energy storage apparatus and the power conversion system is improved.

## Description

### TECHNICAL FIELD

This application relates to the field of energy storage technology, specifically to an energy storage apparatus and an energy storage system.

### BACKGROUND

An energy storage apparatus serves as an electric energy storage and transfer device. An energy storage apparatus can be used in a power system and can store surplus electric energy during off-peak periods through the energy storage apparatus to supplement electricity consumption during peak periods. Thus, the energy storage apparatus can store excess power generated by a power generation system and supply electric energy to the power grid when the power generation system produces less electricity.

An energy storage apparatus typically includes an enclosure and a plurality of battery cells arranged inside the enclosure, with the plurality of battery cells connected in series, parallel, or a hybrid configuration to store electric energy. The energy storage apparatus generally needs to be connected to a power conversion system to enable charging and discharging of the energy storage apparatus. Currently, the power matching between the energy storage apparatus and the power conversion system is poor

### SUMMARY

Embodiments of this application provide an energy storage apparatus and an energy storage system capable of effectively improving power matching between the energy storage apparatus and a power conversion system.

According to a first aspect, an embodiment of this application provides an energy storage apparatus configured to be electrically connected to a power conversion system, where the power conversion system is capable of cooperating with M energy storage apparatuses, M being a positive integer, a rated output power of the power conversion system is P in units of W, an energy of the energy storage apparatus is Q in units of Wh, and a duration for the energy storage apparatus to discharge from a fully charged state to a fully discharged state is A in units of h, satisfying: 0.7 ≤ P/(M * Q/A) ≤ 0.99.

In the above technical solution, with P/(M * Q/A) ≤ 0.99, it is ensured that the power of all energy storage apparatuses cooperating with the power conversion system maintains sufficient margin relative to the power of the power conversion system, eliminating the need for capacity supplementation of the energy storage apparatus over a long period, thereby achieving long-term reliability of the energy storage apparatus; and with P/(M * Q/A) ≥ 0.7, it is ensured that the margin of the power of the energy storage apparatus relative to the power of the power conversion system is not excessive, reducing power waste and improving the economic efficiency of the energy storage apparatus. Thus, from the perspectives of long-term reliability and economic efficiency of the energy storage apparatus, power matching between the energy storage apparatus and the power conversion system is improved.

In some embodiments, 0.75 ≤ P/(M * Q/A) ≤ 0.95. This balances the long-term reliability and economic efficiency of the energy storage apparatus, controlling the cost of the energy storage apparatus at a lower level while extending the capacity supplementation cycle of the energy storage apparatus.

In some embodiments, 0.85 ≤ P/(M * Q/A) ≤ 0.93.

In some embodiments, the energy storage apparatus includes an enclosure and at least one battery, the enclosure includes a battery compartment, and the at least one battery is accommodated in the battery compartment, the battery including at least one battery cell. A capacity of the battery cell is C in units of Ah, a plateau voltage of the battery cell is U₀ in units of V, a number of battery cells in the battery compartment is N, and Q = N * C * U₀. This ensures that the capacities of all battery cells in the battery compartment are equal, allowing the use of battery cells of the same specification. This facilitates improving the assembly efficiency of the energy storage apparatus; and in addition, this reduces the likelihood of space wastage due to differences in specifications of battery cells within the battery compartment.

In some embodiments, the battery compartment accommodates N₁ batteries. The N₁ batteries are formed by X₁ first battery packs connected in parallel, and each first battery pack is formed by Y₁ batteries connected in series; alternatively, the N₁ batteries are formed by Y₁ second battery packs connected in series, and each second battery pack is formed by X₁ batteries connected in parallel, satisfying: N₁ ≥ 1, X₁ ≥ 1, Y₁ ≥ 1, and N₁ = X₁ * Y₁. The battery includes N₂ battery cells, the N₂ battery cells are formed by X₂ first battery cell groups connected in parallel, each first battery cell group is formed by Y₂ battery cells connected in series; alternatively, the N₂ battery cells are formed by Y₂ second battery cell groups connected in series, each second battery cell group is formed by X₂ battery cells connected in parallel, satisfying: N₂ ≥ 1, X₂ ≥ 1, Y₂ ≥ 1, N₂ = X₂ * Y₂, and N = N₁ * N₂. For the N₁ batteries in the battery compartment, Y₁ batteries can first be connected in series to form a first battery pack, followed by X₁ first battery packs connected in parallel; alternatively, X₁ batteries can first be connected in parallel to form a second battery pack, followed by Y₁ second battery packs connected in series. For the N₂ battery cells in the battery, Y₂ battery cells can first be connected in series to form a first battery cell group, followed by X₂ first battery cell groups connected in parallel; alternatively, X₂ battery cells can first be connected in parallel to form a second battery cell group, followed by Y₂ second battery cell groups connected in series. The number Y₁ of series connections of batteries in the battery compartment and the number Y₂ of series connections of battery cells in the battery can be set according to requirements to adjust the voltage of the energy storage apparatus to a reasonable range.

In some embodiments, under the condition of charging the energy storage apparatus, a maximum operating voltage on a direct current side of the power conversion system is U₁, and a minimum operating voltage on the direct current side of the power conversion system is U₂, satisfying: U₂ < U₀ * Y₁ * Y₂ < U₁. This ensures that the voltage of the power conversion system is compatible with the voltage of the power conversion system, enabling both external devices to charge the energy storage apparatus through the power conversion system and the energy storage apparatus to supply power to external devices through the power conversion system.

In some embodiments, a positive electrode material of the battery cell includes lithium-containing phosphate, 2.8 V ≤ U₀ ≤ 3.6 V, and 250 ≤ Y₁ * Y₂ ≤ 468. Thus, when the positive electrode material of the battery cell includes lithium-containing phosphate, the voltage of the power conversion system can be controlled within a reasonable range, ensuring that the voltage of the energy storage apparatus is neither too low, allowing compatibility with a power conversion system having a higher operating voltage, nor too high, reducing the operating voltage requirements of the power conversion system and lowering production costs.

In some embodiments, the positive electrode material of the battery cell includes lithium iron phosphate, 3.1 V ≤ U₀ ≤ 3.3 V, and 400 ≤ Y₁ * Y₂ ≤ 424. Thus, when the positive electrode material of the battery cell includes lithium iron phosphate, the voltage of the power conversion system can be controlled within a reasonable range.

In some embodiments, 3.5 * 10⁶ W ≤ P ≤ 7.5 * 10⁶ W, M = A, and 1 ≤ X₁ * X₂ ≤ 18. When the positive electrode material of the battery cell includes lithium-containing phosphate, 3.5 * 10⁶ W ≤ P ≤ 7.5 * 10⁶ W, and M = A, X₁ * X₂ can be set within the range of 1 to 18 to control the capacity of the battery cell within a reasonable range.

In some embodiments, X₁ = 1.

In some embodiments, X₂ = 1, 2000 Ah ≤ C ≤ 11000 Ah. When the positive electrode material of the battery cell includes lithium-containing phosphate, and both the number X₁ of parallel connections of batteries in the battery compartment and the number X₂ of parallel connections of battery cells in the battery are 1, setting the capacity of the battery cell within the range of 2000 Ah to 11000 Ah satisfies both the power matching requirements and the voltage requirements of the energy storage apparatus.

In some embodiments, 2500 Ah ≤ C ≤ 6000 Ah.

In some embodiments, X₂ = 2, and 1000 Ah ≤ C ≤ 5500 Ah. When the positive electrode material of the battery cell includes lithium-containing phosphate, the number X₁ of parallel connections of batteries in the battery compartment is 1, and the number X₂ of parallel connections of battery cells in the battery is 2, setting the capacity of the battery cell within the range of 1000 Ah to 5500 Ah satisfies both the power matching requirements and the voltage requirements of the energy storage apparatus.

In some embodiments, 2000 Ah ≤ C ≤ 4000 Ah.

In some embodiments, 2 ≤ X₁ ≤ 6. This controls the number X₁ of parallel connections of batteries in the battery compartment within a reasonable range, ensuring that the capacity of the battery cell is not excessively large, reducing the manufacturing difficulty and cost of the battery cell, and preventing an excessive number X₁ of parallel connections of batteries in the battery compartment, thereby facilitating improved space utilization of the battery compartment.

In some embodiments, X₁ = 4, X₂ = 1, and 500 Ah ≤ C ≤ 2600 Ah. When the positive electrode material of the battery cell includes lithium-containing phosphate, and X₁ = 4, X₂ = 1, setting the capacity of the battery cell within the range of 500 Ah to 2600 Ah satisfies both the power matching requirements and the voltage requirements of the energy storage apparatus.

In some embodiments, 800 Ah ≤ C ≤ 1500 Ah.

In some embodiments, X₁ = 4, X₂ = 2, and 250 Ah ≤ C ≤ 1300 Ah. When the positive electrode material of the battery cell includes lithium-containing phosphate, and X₁ = 4, X₂ = 2, setting the capacity of the battery cell within the range of 800 Ah to 1500 Ah satisfies both the power matching requirements and the voltage requirements of the energy storage apparatus.

In some embodiments, 350 Ah ≤ C ≤ 1000 Ah.

In some embodiments, 500 Ah ≤ C ≤ 700 Ah.

In some embodiments, the X₁ first battery packs are arranged along a length direction of the enclosure. When the positive electrode material of the battery cell includes lithium-containing phosphate, and 2 ≤ X₁ ≤ 6, arranging X₁ first battery packs connected in parallel in the battery compartment along the length direction of the enclosure fully utilizes the space of the battery compartment along the length direction of the enclosure, providing a reasonable layout that facilitates improved space utilization of the battery compartment.

In some embodiments, the battery compartment includes a plurality of sub-compartments, the plurality of sub-compartments are arranged along the length direction of the enclosure, and along the length direction of the enclosure, each sub-compartment accommodates one first battery pack. Dividing the battery compartment into a plurality of sub-compartments, each capable of accommodating a first battery pack, allows the first battery packs to be accommodated in the battery compartment more regularly, facilitating easier installation of batteries in the first battery packs.

In some embodiments, the positive electrode material of the battery cell includes lithium transition metal oxide, 2.8 V ≤ U₀ ≤ 4.35 V, and 210 ≤ Y₁ * Y₂ ≤ 530. Thus, when the positive electrode material of the battery cell includes lithium transition metal oxide, the voltage of the power conversion system can be controlled within a reasonable range, ensuring that the voltage of the energy storage apparatus is neither too low, allowing compatibility with a power conversion system having a higher operating voltage, nor too high, reducing the operating voltage requirements of the power conversion system and lowering production costs.

In some embodiments, 3.5 * 10⁶ W ≤ P ≤ 7.5 * 10⁶ W, M = A, and 1 ≤ X₁ * X₂ ≤ 18. When the positive electrode material of the battery cell includes lithium transition metal oxide, 3.5 * 10⁶ W ≤ P ≤ 7.5 * 10⁶ W, and M = A, X₁ * X₂ can be set within the range of 1 to 18 to control the capacity of the battery cell within a reasonable range.

In some embodiments, X₁ = 1.

In some embodiments, X₂ = 1, and 1500 Ah ≤ C ≤ 13400 Ah. When the positive electrode material of the battery cell includes lithium transition metal oxide, and both the number X₁ of parallel connections of batteries in the battery compartment and the number X₂ of parallel connections of battery cells in the battery are 1, setting the capacity of the battery cell within the range of 1500 Ah to 13400 Ah satisfies both the power matching requirements and the voltage requirements of the energy storage apparatus.

In some embodiments, 3000 Ah ≤ C ≤ 7000 Ah.

In some embodiments, X₂ = 2, and 750 Ah ≤ C ≤ 6670 Ah. When the positive electrode material of the battery cell includes lithium transition metal oxide, the number X₁ of parallel connections of batteries in the battery compartment is 1, and the number X₂ of parallel connections of battery cells in the battery is 2, setting the capacity of the battery cell within the range of 750 Ah to 6670 Ah satisfies both the power matching requirements and the voltage requirements of the energy storage apparatus.

In some embodiments, 1800 Ah ≤ C ≤ 4000 Ah.

In some embodiments, 2 ≤ X₁ ≤ 6. This controls the number X₁ of parallel connections of batteries in the battery compartment within a reasonable range, ensuring that the capacity of the battery cell is not excessively large, reducing the manufacturing difficulty and cost of the battery cell, and preventing an excessive number X₁ of parallel connections of batteries in the battery compartment, thereby facilitating improved space utilization of the battery compartment.

In some embodiments, X₁ = 4, X₂ = 1, and 375 Ah ≤ C ≤ 3300 Ah. When the positive electrode material of the battery cell includes lithium transition metal oxide, and X₁ = 4, X₂ = 1, setting the capacity of the battery cell within the range of 375 Ah to 3300 Ah satisfies both the power matching requirements and the voltage requirements of the energy storage apparatus.

In some embodiments, 700 Ah ≤ C ≤ 1600 Ah.

In some embodiments, X₁ = 4, X₂ = 2, and 200 Ah ≤ C ≤ 1600 Ah. When the positive electrode material of the battery cell includes lithium transition metal oxide, and X₁ = 4, X₂ = 2, setting the capacity of the battery cell within the range of 200 Ah to 1600 Ah satisfies both the power matching requirements and the voltage requirements of the energy storage apparatus.

In some embodiments, 340 Ah ≤ C ≤ 1050 Ah.

In some embodiments, 490 Ah ≤ C ≤ 720 Ah.

In some embodiments, the X₁ first battery packs are arranged along a length direction of the enclosure. When the positive electrode material of the battery cell includes lithium transition metal oxide, and 2 ≤ X₁ ≤ 6, arranging X₁ first battery packs connected in parallel in the battery compartment along the length direction of the enclosure fully utilizes the space of the battery compartment along the length direction of the enclosure, providing a reasonable layout that facilitates improved space utilization of the battery compartment.

In some embodiments, the battery compartment includes a plurality of sub-compartments, the plurality of sub-compartments are arranged along the length direction of the enclosure, and along the length direction of the enclosure, each sub-compartment accommodates one first battery pack. Dividing the battery compartment into a plurality of sub-compartments, each capable of accommodating a first battery pack, allows the first battery packs to be accommodated in the battery compartment more regularly, facilitating easier installation of batteries in the first battery packs.

In some embodiments, the battery cell is a sodium-ion battery cell, 1.5 V ≤ U₀ ≤ 4 V, and 230 ≤ Y₁ * Y₂ ≤ 1000. Thus, when the battery cell is a sodium-ion battery cell, the voltage of the power conversion system can be controlled within a reasonable range, ensuring that the voltage of the energy storage apparatus is neither too low, allowing compatibility with a power conversion system having a higher operating voltage, nor too high, reducing the operating voltage requirements of the power conversion system and lowering production costs.

In some embodiments, 3.5 * 10⁶ W ≤ P ≤ 7.5 * 10⁶ W, M = A, and 1 ≤ X₁ * X₂ ≤ 18. When the battery cell is a sodium-ion battery cell, 3.5 * 10⁶ W ≤ P ≤ 7.5 * 10⁶ W, and M = A, X₁ * X₂ can be set within the range of 1 to 18 to control the capacity of the battery cell within a reasonable range.

In some embodiments, X₁ = 1.

In some embodiments, X₂ = 1, and 1200 Ah ≤ C ≤ 18000 Ah. When the battery cell is a sodium-ion battery cell, and both the number X₁ of parallel connections of batteries in the battery compartment and the number X₂ of parallel connections of battery cells in the battery are 1, setting the capacity of the battery cell within the range of 1200 Ah to 18000 Ah satisfies both the power matching requirements and the voltage requirements of the energy storage apparatus.

In some embodiments, 2000 Ah ≤ C ≤ 10000 Ah.

In some embodiments, X₂ = 2, and 600 Ah ≤ C ≤ 9000 Ah. When the battery cell is a sodium-ion battery cell, the number X₁ of parallel connections of batteries in the battery compartment is 1, and the number X₂ of parallel connections of battery cells in the battery is 2, setting the capacity of the battery cell within the range of 600 Ah to 9000 Ah satisfies both the power matching requirements and the voltage requirements of the energy storage apparatus.

In some embodiments, 1600 Ah ≤ C ≤ 4000 Ah.

In some embodiments, 2 ≤ X₁ ≤ 6. This controls the number X₁ of parallel connections of batteries in the battery compartment within a reasonable range, ensuring that the capacity of the battery cell is not excessively large, reducing the manufacturing difficulty and cost of the battery cell, and preventing an excessive number X₁ of parallel connections of batteries in the battery compartment, thereby facilitating improved space utilization of the battery compartment.

In some embodiments, X₁ = 4, X₂ = 1, and 300 Ah ≤ C ≤ 4000 Ah. When the battery cell is a sodium-ion battery cell, and X₁ = 4, X₂ = 1, setting the capacity of the battery cell within the range of 300 Ah to 4000 Ah satisfies both the power matching requirements and the voltage requirements of the energy storage apparatus.

In some embodiments, 700 Ah ≤ C ≤ 1500 Ah.

In some embodiments, X₁ = 4, X₂ = 2, and 150 Ah ≤ C ≤ 1500 Ah. When the battery cell is a sodium-ion battery cell, and X₁ = 4, X₂ = 2, setting the capacity of the battery cell within the range of 150 Ah to 1500 Ah satisfies both the power matching requirements and the voltage requirements of the energy storage apparatus.

In some embodiments, 350 Ah ≤ C ≤ 1200 Ah.

In some embodiments, 400 Ah ≤ C ≤ 650 Ah.

In some embodiments, the X₁ first battery packs are arranged along a length direction of the enclosure. When the battery cell is a sodium-ion battery cell, and 2 ≤ X₁ ≤ 6, arranging X₁ first battery packs connected in parallel in the battery compartment along the length direction of the enclosure fully utilizes the space of the battery compartment along the length direction of the enclosure, providing a reasonable layout that facilitates improved space utilization of the battery compartment.

In some embodiments, the battery compartment includes a plurality of sub-compartments, the plurality of sub-compartments are arranged along the length direction of the enclosure, and along the length direction of the enclosure, each sub-compartment accommodates one first battery pack. Dividing the battery compartment into a plurality of sub-compartments, each capable of accommodating a first battery pack, allows the first battery packs to be accommodated in the battery compartment more regularly, facilitating easier installation of batteries in the first battery packs.

In some embodiments, along a height direction of the enclosure, the battery compartment accommodates only one first battery pack, and Y₁ batteries in each first battery pack are arranged along the height direction of the enclosure, 2 ≤ Y₁ ≤ 10. All batteries in the first battery pack are arranged along the height direction of the enclosure, facilitating the series connection of all batteries in the first battery pack. Setting Y₁ between 2 and 10 ensures that Y₁ is not excessively large. The number of batteries arranged along the height direction of the enclosure in the battery compartment is not excessive, facilitating improved space utilization of the battery compartment.

In some embodiments, the battery cell includes a housing and at least one electrode assembly, and the electrode assembly is accommodated within the housing. The housing has a cuboid shape, a dimension of the housing in a first direction is W₁, a dimension of the housing in a second direction is T₁, and a dimension of the housing in a third direction is Ki. One of the first direction, the second direction, and the third direction is parallel to the length direction of the enclosure, another is parallel to a width direction of the enclosure, and yet another is parallel to the height direction of the enclosure. The housing includes a first wall and a second wall oppositely disposed along the first direction, a third wall and a fourth wall oppositely disposed along the second direction, a fifth wall and a sixth wall oppositely disposed along the third direction, a sum of thicknesses of the first wall and the second wall is a, a sum of thicknesses of the third wall and the fourth wall is b, and a sum of thicknesses of the fifth wall and the sixth wall is c, satisfying: (W₁ - a) * (T₁ - b) * (K₁ - c) / (W₁ * T₁ * K₁) ≥ 90%. In such a battery cell, a ratio of a volume of an internal space of the housing of the battery cell to a volume of the housing is 90% or more, making the internal space of the housing relatively large, increasing the space available in the housing to accommodate the electrode assembly, and under the same chemical system, the volumetric energy density of the battery cell can be improved.

In some embodiments, (W₁ - a) / W₁ ≥ 97.0%, (T₁ - b) / T₁ ≥ 96.5%, and (K₁ - c) / K₁ ≥ 96.5%. This increases the proportion of the internal space of the housing in three directions, further increasing the volumetric energy density of the battery cell.

In some embodiments, the housing includes a shell and an end cap, the shell has an opening, the end cap covers the opening; the shell includes the first wall, the second wall, the third wall, the fourth wall, and the fifth wall integrally formed, and the end cap is the sixth wall. When assembling the battery, electrode terminals can first be installed on the end cap, the electrode assembly can then be accommodated in the shell, and the end cap can subsequently cover the opening of the shell, reducing the difficulty of installing the electrode assembly into the housing and the difficulty of installing the electrode terminals onto the housing.

In some embodiments, the battery cell further includes a first insulating member and a second insulating member, the first insulating member is disposed between the fifth wall and the electrode assembly and abuts the fifth wall; the second insulating member is disposed between the sixth wall and the electrode assembly and abuts the sixth wall; and a maximum dimension of the first insulating member in the third direction is e₁, and a maximum dimension of the second insulating member in the third direction is e₂, satisfying: (W₁ - a - 1.6 mm) * (T₁ - b - 1.6 mm) * (K₁ - c - e₁ - e₂) / (W₁ * T₁ * K₁) ≥ 88%, 0.3 mm ≤ e₁ ≤ 1.2 mm, and 2 mm ≤ e₂ ≤ 10 mm. This increases the space within the housing available for the electrode assembly, allowing accommodation of a larger volume electrode assembly, which further increases the volumetric energy density of the battery cell.

In some embodiments, the battery cell further includes a first insulating member and a second insulating member, the first insulating member is disposed between the fifth wall and the electrode assembly and abuts the fifth wall; the second insulating member is disposed between the sixth wall and the electrode assembly and abuts the sixth wall; and a maximum dimension of the first insulating member in the third direction is e₁, and a maximum dimension of the second insulating member in the third direction is e₂, satisfying: (W₁ - a - 4 mm) * (T₁ - b - 4 mm) * (K₁ - c - e₁ - e₂) / (W₁ * T₁ * K₁) ≥ 85%, 0.3 mm ≤ e₁ ≤ 1.2 mm, and 2 mm ≤ e₂ ≤ 10 mm. This increases the space within the housing available for the electrode assembly, allowing accommodation of a larger volume electrode assembly, which further increases the volumetric energy density of the battery cell.

In some embodiments, W₁ ≥ T₁, the first direction is parallel to the length direction of the enclosure, the second direction is parallel to the width direction of the enclosure, and the third direction is parallel to the height direction of the enclosure. When the shell has an end cap at only one end and W₁ ≥ T₁, arranging the end cap and the fifth wall of the housing oppositely along the height direction of the enclosure, the first wall and the second wall of the housing oppositely along the length direction of the enclosure, and the third wall and the fourth wall of the housing oppositely along the width direction of the enclosure facilitates increasing the volume proportion of all battery cells in the battery compartment.

In some embodiments, the housing includes a shell and two end caps, the shell has two openings oppositely disposed along the third direction, and the two end caps respectively cover the two openings; and the shell includes the first wall, the second wall, the third wall, and the fourth wall integrally formed, and the two end caps are the fifth wall and the sixth wall, respectively.

In some embodiments, the battery cell further includes a third insulating member and a fourth insulating member, the third insulating member is disposed between the fifth wall and the electrode assembly and abuts the fifth wall, and the fourth insulating member is disposed between the sixth wall and the electrode assembly and abuts the sixth wall; and a maximum dimension of the third insulating member in the third direction is e₃, and a maximum dimension of the fourth insulating member in the third direction is e₄, satisfying: (W₁ - a - 1.6 mm) * (T₁ - b - 1.6 mm) * (K₁ - c - e₃ - e₄) / (W₁ * T₁ * K₁) ≥ 88%, 2 mm ≤ e₃ ≤ 10 mm, and 2 mm ≤ e₄ ≤ 10 mm. This increases the space within the housing available for the electrode assembly, allowing accommodation of a larger volume electrode assembly, which further increases the volumetric energy density of the battery cell.

In some embodiments, the battery cell further includes a third insulating member and a fourth insulating member, the third insulating member is disposed between the fifth wall and the electrode assembly and abuts the fifth wall, and the fourth insulating member is disposed between the sixth wall and the electrode assembly and abuts the sixth wall; and a maximum dimension of the third insulating member in the third direction is e₃, and a maximum dimension of the fourth insulating member in the third direction is e₄, satisfying: (W₁ - a - 4 mm) * (T₁ - b - 4 mm) * (K₁ - c - e₃ - e₄) / (W₁ * T₁ * K₁) ≥ 85%, 2 mm ≤ e₃ ≤ 10 mm, and 2 mm ≤ e₄ ≤ 10 mm. This increases the space within the housing available for the electrode assembly, allowing accommodation of a larger volume electrode assembly, which further increases the volumetric energy density of the battery cell.

In some embodiments, W₁ ≥ T₁, the first direction is parallel to the height direction of the enclosure, the second direction is parallel to the width direction of the enclosure, and the third direction is parallel to the length direction of the enclosure. When end caps are provided at two ends of the shell and W₁ ≥ T₁, arranging the two end caps of the housing along the length direction of the enclosure, the first wall and the second wall of the housing along the height direction of the enclosure, and the third wall and the fourth wall of the housing oppositely along the width direction of the enclosure facilitates increasing the volume proportion of all battery cells in the battery compartment.

In some embodiments, 3000 cm³ ≤ W₁ * T₁ * K₁ ≤ 40000 cm³. With W₁ * T₁ * K₁ ≥ 3000 cm³, it is ensured that, while satisfying a ratio of the volume of the internal space of the housing to the volume of the housing of 90% or more, the wall thickness of the housing is not too small, thereby meeting the structural strength requirements of the housing; and with W₁ * T₁ * K₁ ≤ 40000 cm³, the capacity and current of the battery cell can be controlled within an appropriate range, reducing the risk of damage to overcurrent components in the circuit.

In some embodiments, 3200 cm³ ≤ W₁ * T₁ * K₁ ≤ 32000 cm³. This balances the structural strength of the housing and the heat generation requirements of the battery cell, further enhancing the structural strength of the housing and reducing the risk of damage to overcurrent components in the circuit.

In some embodiments, 3720 cm³ ≤ W₁ * T₁ * K₁ ≤ 12500 cm³.

In some embodiments, 4000 cm³ ≤ W₁ * T₁ * K₁ ≤ 6000 cm³.

In some embodiments, the positive electrode material of the battery cell includes lithium-containing phosphate, satisfying: C ≥ 350 Ah, and C / ((W₁ - a) * (T₁ - b) * (K₁ - c)) ≥ 118 Ah/L. When the positive electrode material of the battery cell includes lithium-containing phosphate and C ≥ 350 Ah, setting C / ((W₁ - a) * (T₁ - b) * (K₁ - c)) at 118 Ah/L or higher increases the volume proportion of the internal space of the housing of the battery cell, facilitating the achievement of a ratio of the volume of the internal space of the housing of the battery cell to the volume of the housing of 90% or more.

In some embodiments, the positive electrode material of the battery cell includes lithium transition metal oxide, satisfying: C ≥ 650 Ah, and C / ((W₁ - a) * (T₁ - b) * (K₁ - c)) ≥ 190 Ah/L. When the positive electrode material of the battery cell includes lithium transition metal oxide and C ≥ 650 Ah, setting C / ((W₁ - a) * (T₁ - b) * (K₁ - c)) at 190 Ah/L or higher increases the volume proportion of the internal space of the housing of the battery cell, facilitating the achievement of a ratio of the volume of the internal space of the housing of the battery cell to the volume of the housing of 90% or more.

In some embodiments, the battery cell is a sodium-ion battery cell, satisfying: C ≥ 260 Ah, and C / ((W₁ - a) * (T₁ - b) * (K₁ - c)) ≥ 87 Ah/L. When the battery cell is a sodium-ion battery cell and C ≥ 260 Ah, setting C / ((W₁ - a) * (T₁ - b) * (K₁ - c)) at 87 Ah/L or higher increases the volume proportion of the internal space of the housing of the battery cell, facilitating the achievement of a ratio of the volume of the internal space of the housing of the battery cell to the volume of the housing of 90% or more.

According to a second aspect, an embodiment of this application provides an energy storage system including a power conversion system and M energy storage apparatuses provided by any embodiment of the first aspect, where the energy storage apparatuses are electrically connected to the power conversion system.

In some embodiments, M = 2, A = 2; or, M = 4, A = 4; or, M = 8, A = 8.

### BRIEF DESCRIPTION OF DRAWINGS

To illustrate the technical solutions of the embodiments of this application more clearly, the drawings required for use in the embodiments are briefly introduced below. It should be understood that the following drawings only show some embodiments of this application and therefore should not be regarded as limiting the scope. For those of ordinary skill in the art, other related drawings can be obtained based on these drawings without creative effort.
FIG. 1 is a schematic block diagram of an energy storage system according to some embodiments of this application;
FIG. 2 is an axonometric view of an energy storage apparatus according to some embodiments of this application;
FIG. 3 is a schematic structural diagram of an energy storage apparatus according to some embodiments of this application;
FIG. 4 is a schematic structural diagram of the enclosure shown in FIG. 3;
FIG. 5 is an A-A sectional view of the enclosure shown in FIG. 4;
FIG. 6 is an exploded view of the battery shown in FIG. 3;
FIG. 7 is an exploded view of the battery cell shown in FIG. 6;
FIG. 8 is a layout diagram of batteries in the battery compartment shown in FIG. 3;
FIG. 9 is a layout diagram of batteries in a battery compartment according to some other embodiments of this application;
FIG. 10 is a schematic structural diagram of a battery according to some embodiments of this application;
FIG. 11 is a schematic structural diagram of a battery according to some other embodiments of this application;
FIG. 12 is a schematic structural diagram of an energy storage apparatus according to some other embodiments of this application;
FIG. 13 is a schematic structural diagram of the enclosure shown in FIG. 12;
FIG. 14 is a B-B sectional view of the energy storage apparatus shown in FIG. 12;
FIG. 15 is an axonometric view of a battery cell according to some embodiments of this application;
FIG. 16 is an exploded view of the battery cell shown in FIG. 15;
FIG. 17 is an exploded sectional view of the battery cell shown in FIG. 15 taken along the UW plane;
FIG. 18 is an exploded sectional view of the battery cell shown in FIG. 15 taken along the VW plane;
FIG. 19 is an axonometric view of a battery cell according to some other embodiments of this application;
FIG. 20 is an exploded view of the battery cell shown in FIG. 19;
FIG. 21 is an exploded sectional view of the battery cell shown in FIG. 19 taken along the UW plane; and
FIG. 22 is an exploded sectional view of the battery cell shown in FIG. 19 taken along the VW plane.

Reference signs: 1. enclosure; 11. battery compartment; 111. sub-compartment; 112. partition; 113. support member; 12. thermal management compartment; 13. main control compartment; 14. electrical compartment; 2. battery; 2a. first battery pack; 2b. second battery pack; 21. battery cell; 21a. first battery cell group; 21b. second battery cell group; 211. housing; 2111. shell; 2112. end cap; 2113. first wall; 2114. second wall; 2115. third wall; 2116. fourth wall; 2117. fifth wall; 2118. sixth wall; 212. electrode terminal; 213. electrode assembly; 2131. tab; 214. first insulating member; 215. second insulating member; 216. third insulating member; 217. fourth insulating member; 22. battery box; 221. first portion; 222. second portion; 10. energy storage apparatus; 20. power conversion system; 100. energy storage system; U. first direction; V. second direction; W. third direction; X. length direction of the enclosure; Y. width direction of the enclosure; and Z. height direction of the enclosure.

### DESCRIPTION OF EMBODIMENTS

To make the objectives, technical solutions, and advantages of the embodiments of this application clearer, the technical solutions in the embodiments of this application are clearly described below with reference to the drawings in the embodiments of this application. Apparently, the embodiments described herein are some rather than all of the embodiments of this application. Based on the embodiments in this application, all other embodiments obtained by those of ordinary skill in the art without creative effort fall within the protection scope of this application.

Unless otherwise defined, all technical and scientific terms used in this application have the same meanings as commonly understood by those skilled in the technical field of this application. The terms used in the specification of this application are solely for the purpose of describing specific embodiments and are not intended to limit this application. The terms "including," "comprising," and "having" and any variations thereof in the specification, claims, and the above description of the drawings of this application are intended to cover non-exclusive inclusion. In the specification, claims, or accompanying drawings of this application, the terms "first", "second", and the like are intended to distinguish between different objects rather than to describe a particular order or a primary-secondary relationship.

Reference to "embodiment" in this application means that a specific feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that unless otherwise stated and defined explicitly, the terms "installing," "connecting," "joining," and "attaching" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist. For example, A and/or B may indicate: A exists alone, A and B exist simultaneously, and B exists alone. In addition, the character "/" in this application generally indicates an "or" relationship between the contextually associated objects.

In the embodiments of this application, the same reference signs denote the same components. For brevity, detailed descriptions of the same components are not repeated in different embodiments. It should be understood that the thicknesses, lengths, widths, and other dimensions of various components in the embodiments of this application shown in the drawings, as well as the overall thicknesses, lengths, widths, and other dimensions of the integrated apparatus, are merely exemplary and should not constitute any limitation to this application.

The term "plurality" appearing in this application refers to two or more (including two).

In the embodiments of this application, the battery cell may be a secondary battery, and the secondary battery refers to a battery cell that can be recharged to activate active materials for continuous use after the battery cell is discharged.

Battery cells include but are not limited to lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickelcadmium batteries, and lead-acid batteries.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode, reducing the risk of short-circuiting between the positive and negative electrodes while allowing active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector includes two back-to-back surfaces in a thickness direction of the positive electrode current collector, and the positive electrode active material is arranged on either or both of the two back-to-back surfaces of the positive electrode current collector.

As an example, the positive electrode current collector may be a metal foil current collector or a composite current collector. For example, as a metal foil, aluminum with silver surface treatment, stainless steel with silver surface treatment, stainless steel, copper, aluminum, nickel, carbon electrode, carbon, nickel, or titanium may be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to such materials, and other conventional well-known materials usable as positive electrode active materials for batteries may alternatively be used. These positive electrode active materials may be used alone or in combination of two or more.

In some embodiments, the negative electrode may be a negative electrode plate, and the negative electrode plate may include a negative electrode current collector.

As an example, the negative electrode current collector may use a metal foil, foamed metal, or a composite current collector. For example, as the metal foil, the negative electrode current collector may use silver surface-treated aluminum or stainless steel, stainless steel, copper, aluminum, nickel, baked carbon, carbon, nickel, or titanium. The foamed metal may be foamed nickel, foamed copper, foamed aluminum, foamed alloy, or foamed carbon. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

As an example, the negative electrode plate may include a negative electrode current collector and a negative electrode active material disposed on at least one surface of the negative electrode current collector.

As an example, the negative electrode current collector has two opposite surfaces in its thickness direction, and the negative electrode active material is disposed on either or both of the two opposite surfaces of the negative electrode current collector.

As an example, the negative electrode active material may use well-known negative electrode active materials for battery cells in the art. As an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly is a wound structure.

In some embodiments, the electrode assembly is a laminated structure.

The energy storage apparatus 10 is an apparatus integrating a plurality of battery cells 21 within an enclosure 1, with the plurality of battery cells 21 connected in series, parallel, or a hybrid configuration to store electric energy. The energy storage apparatus 10 can be used in a power system to store surplus electric energy during off-peak periods to supplement electricity consumption during peak periods.

The energy storage apparatus 10 generally needs to be connected to a power conversion system 20. External devices (such as a power grid) can convert electric energy from alternating current to direct current through the power conversion system 20 and store it in the energy storage apparatus 10 to charge the energy storage apparatus 10. The energy storage apparatus 10 can also convert electric energy from direct current to alternating current through the power conversion system 20 to supply power to external devices, discharging the energy storage apparatus 10. For a typical energy storage apparatus 10, the matching issue between the energy storage apparatus 10 and the power conversion system 20 is not considered, and sufficient power margin is not set for the energy storage apparatus 10, requiring capacity supplementation of the energy storage apparatus 10 within a short period. For example, additional battery cells 21 are added to the original energy storage apparatus 10 to achieve capacity supplementation. Such an energy storage apparatus 10 has poor power matching with the power conversion system 20.

In view of this, an embodiment of this application provides an energy storage apparatus 10 configured to be electrically connected to a power conversion system 20, where the power conversion system 20 is capable of cooperating with M energy storage apparatuses 10, M being a positive integer, a rated output power of the power conversion system 20 is P in units of W, an energy of the energy storage apparatus 10 is Q in units of Wh, a duration for the energy storage apparatus 10 to discharge from a fully charged state to a fully discharged state is A in units of h, and P/(M * Q/A) is set within the range of 0.7 to 0.99. This balances the long-term reliability and economic efficiency of the energy storage apparatus 10, improving power matching between the energy storage apparatus 10 and the power conversion system 20.

The energy storage apparatus 10 described in the embodiments of this application is applicable to an energy storage system 100.

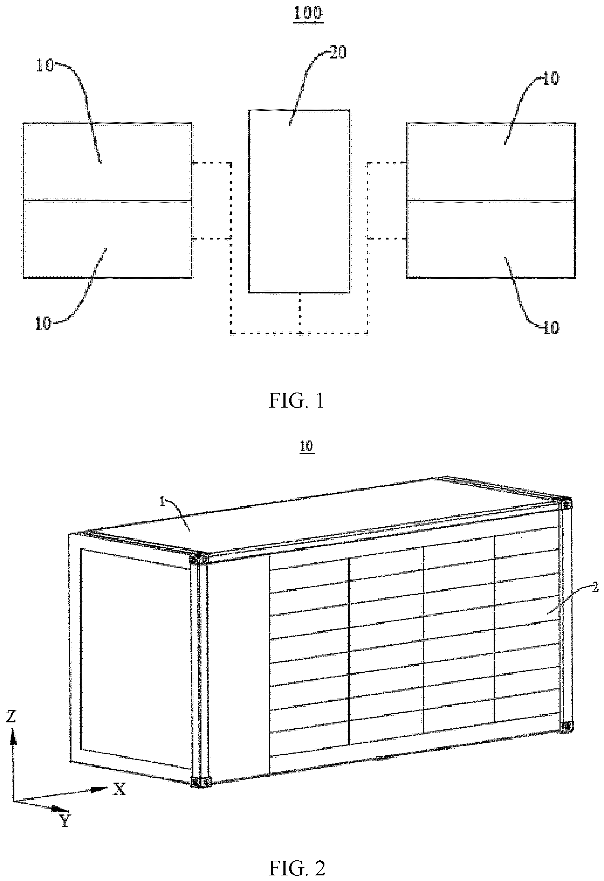

Referring to FIG. 1, FIG. 1 is a schematic block diagram of an energy storage system 100 according to some embodiments of this application. The energy storage system 100 may include an energy storage apparatus 10 and a power conversion system 20 (PCS, Power Conversion System), where the energy storage apparatus 10 is electrically connected to the power conversion system 20.

The power conversion system 20 is a device connecting external devices and the energy storage apparatus 10, where the external device may be a power grid, an electric device, or the like. The power conversion system 20 has a direct current side and an alternating current side, the direct current side is configured to be electrically connected to the energy storage apparatus 10, and the alternating current side is configured to be connected to external devices.

When the energy storage apparatus 10 is in a charging state, the power conversion system 20 acts as a rectifier, converting electric energy from alternating current on the alternating current side to direct current and storing it in the energy storage apparatus 10. When the energy storage apparatus 10 is in a discharging state, the power conversion system 20 acts as an inverter, converting the electric energy stored in the energy storage apparatus 10 from direct current on the direct current side to alternating current and delivering it to external devices.

In the energy storage system 100, one power conversion system 20 may correspond to one energy storage apparatus 10 or a plurality of energy storage apparatuses 10. In an embodiment where one power conversion system 20 corresponds to a plurality of energy storage apparatuses 10, the energy storage apparatuses 10 may be two, three, four, five, six, seven, eight, or more. As an example, in FIG. 1, one power conversion system 20 corresponds to four energy storage apparatuses 10 electrically connected.

A specific structure of an energy storage apparatus 10 according to an embodiment of this application is described in detail below with reference to the drawings.

Referring to FIG. 2, FIG. 2 is an axonometric view of an energy storage apparatus 10 according to some embodiments of this application. An embodiment of this application provides an energy storage apparatus 10 configured to be electrically connected to a power conversion system 20, where the power conversion system 20 is capable of cooperating with M energy storage apparatuses 10, M being a positive integer, a rated output power of the power conversion system 20 is P in units of W, an energy of the energy storage apparatus 10 is Q in units of Wh, and a duration for the energy storage apparatus 10 to discharge from a fully charged state to a fully discharged state is A in units of h, satisfying: 0.7 ≤ P/(M * Q/A) ≤ 0.99.

The rated output power of the power conversion system 20 refers to the rated output power on the alternating current side of the power conversion system 20. The rated output power of the power conversion system 20 is denoted by P in units of "watts," abbreviated as "W." The energy of the energy storage apparatus 10 is denoted by Q in units of "watt-hours," with the symbol "Wh." The duration for the energy storage apparatus 10 to discharge from a fully charged state to a fully discharged state is denoted by A in units of "hours," with the symbol "h."

It can be understood that when the energy storage apparatus 10 is fully charged, the energy storage apparatus 10 is in a fully charged state, when the energy of the energy storage apparatus 10 is completely discharged, the energy storage apparatus 10 is in a fully discharged state. The duration for the energy storage apparatus 10 to discharge from a fully charged state to a fully discharged state through the power conversion system 20 is denoted by A in units of "hours," with the symbol "h."

M may be 1, 2, 3, 4, 5, 6, 7, 8, or the like. M may be equal to A, or M may be greater than A, or M may be less than A.

M * Q represents the total energy of the M energy storage apparatuses 10 cooperating with the power conversion system 20, and M * Q/A represents the power of the M energy storage apparatuses 10 cooperating with the power conversion system 20.

P/(M * Q/A) may be a specific value such as 0.7, 0.75, 0.8, 0.85, 0.9, 0.95, 0.99, or a range between any two of these values.

In the embodiments of this application, with P/(M * Q/A) ≤ 0.99, it is ensured that the power of all energy storage apparatuses 10 cooperating with the power conversion system 20 maintains sufficient margin relative to the power of the power conversion system 20, eliminating the need for capacity supplementation of the energy storage apparatus 10 over a long period, thereby achieving long-term reliability of the energy storage apparatus 10; and with P/(M * Q/A) ≥ 0.7, it is ensured that the margin of the power of the energy storage apparatus 10 relative to the power of the power conversion system 20 is not excessive, reducing power waste and improving the economic efficiency of the energy storage apparatus 10. Thus, from the perspectives of long-term reliability and economic efficiency of the energy storage apparatus 10, power matching between the energy storage apparatus 10 and the power conversion system 20 is improved.

The following provides a detailed explanation through experimental data:

**Table 1**

| No. | P (W) | M | Q (Wh) | A (h) | P/(M * Q/A) | Capacity supplementation cycle of energy storage apparatus |
|---|---|---|---|---|---|---|
| Example 1 | 4900000 | 4 | 4949495 | 4 | 0.99 | 3 months |
| Example 2 | 4900000 | 4 | 5051546 | 4 | 0.97 | 5 months |
| Example 3 | 4900000 | 4 | 5157895 | 4 | 0.95 | 7 months |
| Example 4 | 4900000 | 4 | 5268817 | 4 | 0.93 | 9 months |
| Example 5 | 4900000 | 4 | 5444444 | 4 | 0.9 | 11 months |
| Example 6 | 4900000 | 4 | 5697674 | 4 | 0.86 | 36 months |
| Example 7 | 4900000 | 4 | 6125000 | 4 | 0.8 | 84 months |
| Example 8 | 4900000 | 4 | 6533333 | 4 | 0.75 | 132 months |
| Example 9 | 4900000 | 4 | 7000000 | 4 | 0.7 | 192 months |
| Comparative Example 1 | 4900000 | 4 | 4900000 | 4 | 1 | 1 month |

According to Table 1 above, by comparing Examples 1 to 9 with Comparative Example 1, it can be seen that when P/(M * Q/A) ≤ 0.99, the capacity supplementation cycle of the energy storage apparatus 10 is longer, eliminating the need for capacity supplementation of the energy storage apparatus 10 in a short period, achieving long-term reliability of the energy storage apparatus 10.

In some embodiments, 0.75 ≤ P/(M * Q/A) ≤ 0.95.

In the embodiments, P/(M * Q/A) may be a specific value such as 0.75, 0.78, 0.8, 0.83, 0.85, 0.88, 0.9, 0.93, 0.95, or a range between any two of these values.

In the embodiments, 0.75 ≤ P/(M * Q/A) ≤ 0.95. This balances the long-term reliability and economic efficiency of the energy storage apparatus 10, controlling the cost of the energy storage apparatus 10 at a lower level while extending the capacity supplementation cycle of the energy storage apparatus 10.

In some embodiments, 0.85 ≤ P/(M * Q/A) ≤ 0.93.

In the embodiments, P/(M * Q/A) may be a specific value such as 0.85, 0.86, 0.87, 0.88, 0.89, 0.9, 0.91, 0.92, 0.93, or a range between any two of these values.

In the embodiments, 0.85 ≤ P/(M * Q/A) ≤ 0.93. This further balances the long-term reliability and economic efficiency of the energy storage apparatus 10, further controlling the cost of the energy storage apparatus 10 at a lower level while further extending the capacity supplementation cycle of the energy storage apparatus 10.

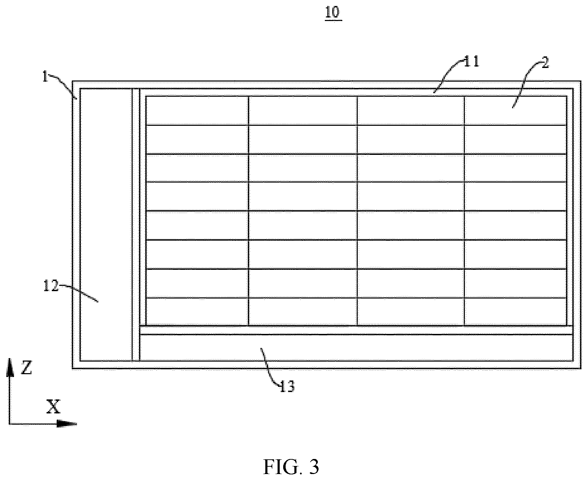

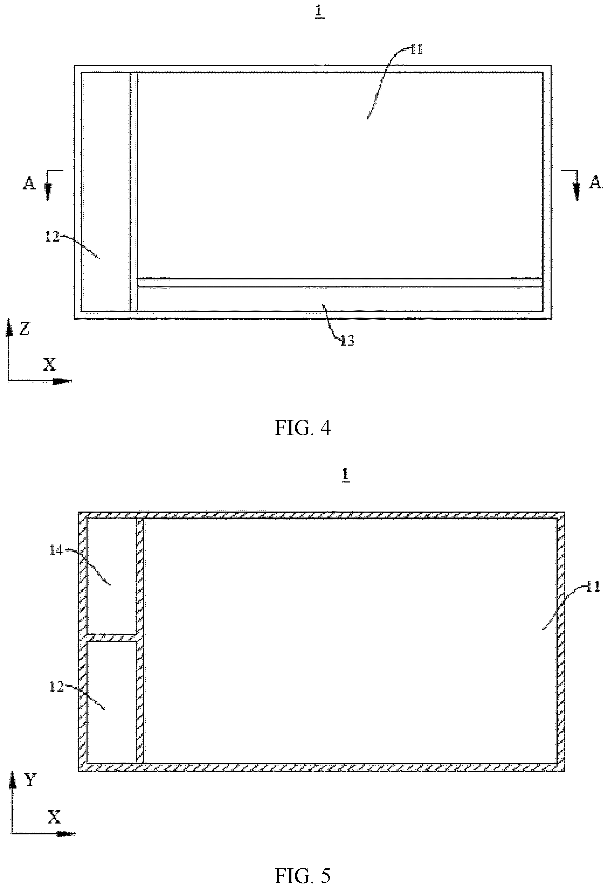

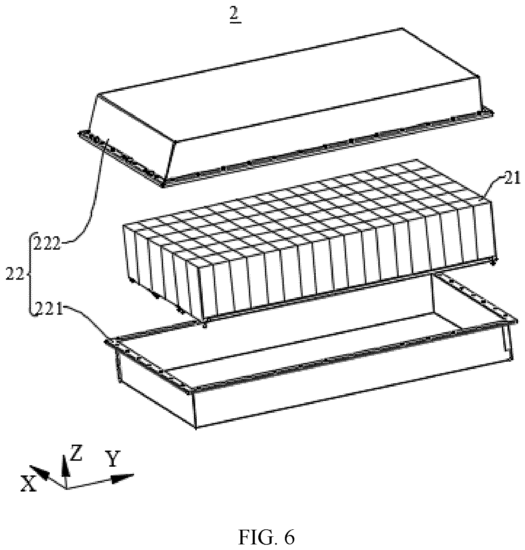

In some embodiments, referring to FIG. 3 to FIG. 6, FIG. 3 is a schematic structural diagram of an energy storage apparatus 10 according to some embodiments of this application; FIG. 4 is a schematic structural diagram of the enclosure 1 shown in FIG. 3; FIG. 5 is an A-A sectional view of the enclosure 1 shown in FIG. 4; and FIG. 6 is an exploded view of the battery 2 shown in FIG. 3. The energy storage apparatus 10 includes an enclosure 1 and at least one battery 2, the enclosure 1 includes a battery compartment 11, the at least one battery 2 is accommodated in the battery compartment 11, and the battery 2 includes at least one battery cell 21. A capacity of the battery cell 21 is C in units of Ah, a plateau voltage of the battery cell 21 is U₀ in units of V, a number of battery cells 21 in the battery compartment 11 is N, and Q = N * C * U₀.

The capacity of the battery cell 21 is denoted by C in units of "ampere-hours," with the symbol "Ah." The plateau voltage of the battery cell 21 is denoted by U₀ in units of "volts," abbreviated as "V." The plateau voltage refers to the voltage value corresponding to the point where the voltage change of the battery cell 21 is minimal while the capacity change is significant.

The enclosure 1 may be a standard component meeting the international standards set by the International Organization for Standardization (ISO) or a non-standard component. The enclosure 1 may alternatively be referred to as a container, and the energy storage apparatus 10 may alternatively be referred to as an energy storage container. The enclosure 1 may have various shapes, such as cylindrical or prismatic. As an example, in FIG. 3, the enclosure 1 is quadrangular prismatic, and specifically, the enclosure 1 is rectangular cuboid-shaped.

The battery compartment 11 is a space inside the enclosure 1 configured to accommodate the battery 2. The battery compartment 11 may accommodate only the battery 2 or may accommodate other components in addition to the battery 2, such as fire protection components, which may include pipes, detectors, and the like. The battery compartment 11 may have various shapes, such as cylindrical or prismatic. The prism may be a triangular prism, quadrangular prism, pentagonal prism, hexagonal prism, or the like. As an example, in FIG. 3 to FIG. 5, the battery compartment 11 is quadrangular prismatic, and specifically, the battery 2 is rectangular cuboid-shaped. Taking the battery compartment 11 as a rectangular cuboid as an example, along the width direction Y of the enclosure, at least one side of the battery compartment 11 is formed with an opening through which the battery 2 can enter the battery compartment 11. A door may be correspondingly provided on the opening side of the battery compartment 11, and the door may be slidably connected, hingedly connected, or the like to the enclosure 1 to open or close the opening by sliding or rotating.

The enclosure 1 may form only the battery compartment 11, or the enclosure 1 may form spaces for accommodating other components in addition to the battery compartment 11. As an example, the enclosure 1 may also include a thermal management compartment 12 and a main control compartment 13. The thermal management compartment 12 may accommodate a water-cooling unit configured to provide a fluid medium for thermal management components, which may be water-cooling plates disposed in the battery compartment 11 for managing the temperature of the battery cells 21. The main control compartment 13 may be configured to accommodate a main control unit configured for high-voltage control and communication of the plurality of battery cells 21 in the battery compartment 11. The enclosure 1 is rectangular cuboid-shaped, the battery compartment 11 and the main control compartment 13 are arranged along the height direction Z of the enclosure, the thermal management compartment 12 may be located on one side of the battery compartment 11 along the length direction X of the enclosure, and along the height direction Z of the enclosure, the main control compartment 13 may be located at the bottom of the battery compartment 11. In other embodiments, the enclosure 1 may also include an electrical compartment 14 configured to accommodate a bus unit, a power distribution unit, and a control unit. The bus unit is configured to enable the convergence of a plurality of batteries 2, achieving a safe connection between the plurality of batteries 2 and the direct current side of the power conversion system 20. The power distribution unit may draw power from the power grid to supply power to the internal control system and auxiliary systems; and the control unit may include a battery cell 21 management unit, a fire control unit, and the like, configured to detect and manage the interior of the energy storage apparatus 10. The electrical compartment 14 and the thermal management compartment 12 may collectively be located on one side of the battery compartment 11 along the length direction X of the enclosure, and the electrical compartment 14 and the thermal management compartment 12 are arranged along the width direction Y of the enclosure.

The number of batteries 2 in the battery compartment 11 may be one or more, and the number of battery cells 21 in the battery 2 may be one or more. The batteries 2 in the battery compartment 11 may be connected in series, parallel, or a hybrid configuration, and the battery cells 21 in the battery 2 may also be connected in series, parallel, or a hybrid configuration, where a hybrid configuration refers to a combination of series and parallel connections.

It can be understood that if the number of battery cells 21 in each battery 2 is equal, the total number N of battery cells 21 in the battery compartment 11 equals the number of batteries 2 in the battery compartment 11 multiplied by the number of battery cells 21 in the battery 2. If the battery compartment 11 contains one battery 2 and the battery 2 contains one battery cell 21, the battery compartment 11 accommodates only one battery cell 21, and N = 1.

Along the length direction X of the enclosure, the battery compartment 11 may accommodate one battery 2 or a plurality of batteries 2; along the width direction Y of the enclosure, the battery compartment 11 may accommodate one battery 2 or a plurality of batteries 2; and along the height of the enclosure 1, the battery compartment 11 may accommodate one battery 2 or a plurality of batteries 2. The battery 2 may be rectangular cuboid-shaped, and after being accommodated in the battery compartment 11, one of the length direction, width direction, and height direction of the battery 2 may be parallel to the length direction X of the enclosure, another may be parallel to the width direction Y of the enclosure, and yet another may be parallel to the height direction Z of the enclosure. As an example, in the embodiment shown in FIG. 3, along the length direction X of the enclosure, the battery compartment 11 accommodates a plurality of batteries 2; along the height direction Z of the enclosure, the battery compartment 11 accommodates a plurality of batteries 2; along the width direction Y of the enclosure, the battery compartment 11 accommodates only one battery 2; the length direction of the battery 2 is parallel to the width direction Y of the enclosure; the width direction of the battery 2 is parallel to the length direction X of the enclosure; and the height direction of the battery 2 is parallel to the height direction Z of the enclosure.

In the embodiments, with Q = N * C * U₀, it is ensured that the capacities of all battery cells 21 in the battery compartment 11 are equal, allowing the use of battery cells 21 of the same specification. This facilitates improving the assembly efficiency of the energy storage apparatus 10; and in addition, this reduces the likelihood of space wastage due to differences in specifications of battery cells 21 within the battery compartment 11.

In some embodiments, the battery 2 may be a battery module, for example, the battery 2 includes a plurality of battery cells 21, and the plurality of battery cells 21 are arranged and fixed to form a battery module. In the battery module, a frame may be formed by two side plates and two end plates, and the battery cells 21 are fixed within the frame to form the battery module.

In some other embodiments, as shown in FIG. 6, the battery 2 may also be a battery pack, and the battery 2 may further include a battery box 22, with the battery cells 21 accommodated in the battery box 22. If the battery 2 includes a plurality of battery cells 21, the plurality of battery cells 21 may be arranged in an array within the battery box 22. The battery box 22 may include a first portion 221 and a second portion 222, where the first portion 221 and the second portion 222 cover each other to define an accommodation space for the battery cells 21. The first portion 221 and the second portion 222 may have various shapes, such as rectangular cuboid-shaped or cylindrical. The first portion 221 may be a hollow structure with one side open, and the second portion 222 may also be a hollow structure with one side open, where the open side of the second portion 222 is engaged with the open side of the first portion 221 so as to form a battery box 22 having an accommodation space. Alternatively, the first portion 221 may be a hollow structure with one side open, and the second portion 222 may be a plate-shaped structure, where the second portion 222 covers the open side of the first portion 221 to form a battery box 22 having an accommodation space. The first portion 221 and the second portion 222 may be sealed by a sealing element, and the sealing element may be a sealing ring, a sealing adhesive, or the like.

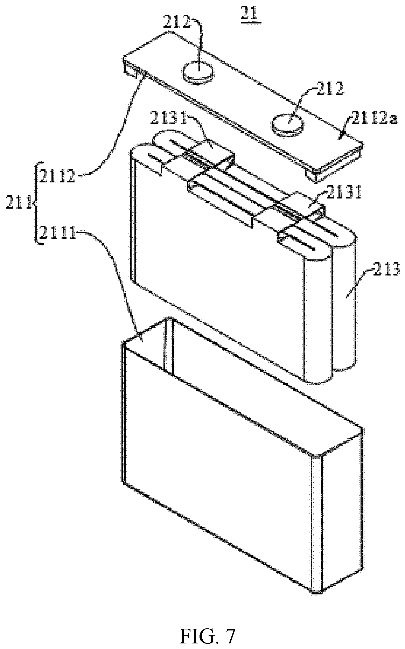

In some embodiments, referring to FIG. 7, FIG. 7 is an exploded view of the battery cell 21 shown in FIG. 6. The battery cell 21 may include a housing 211, an electrode assembly 213, and electrode terminals 212. The electrode terminals 212 are disposed on the housing 211, and the electrode terminals 212 are electrically connected to the electrode assembly 213.

The housing 211 is a component configured to accommodate the electrode assembly 213, electrolyte, and the like. The housing 211 may be cylindrical or prismatic. The prism includes a triangular prism, quadrangular prism, pentagonal prism, hexagonal prism, or the like. The quadrangular prism includes an oblique quadrangular prism, a cuboid, and the like. The cuboid includes a rectangular cuboid, a square cuboid, and the like. As an example, the housing 211 may include a shell 2111 and an end cap 2112.

The shell 2111 may be a hollow structure with an opening formed at one end, or the shell 2111 may be a hollow structure with openings formed at opposite ends. The shell 2111 may have various shapes, such as cylindrical or prismatic. The material of the shell 2111 may be various, such as copper, iron, aluminum, steel, aluminum alloy, plastic, or the like.

The end cap 2112 is a component that closes the opening of the shell 2111 to isolate the internal environment of the battery cell 21 from the external environment. The end cap 2112 and the shell 2111 together define an accommodation space for the electrode assembly 213, electrolyte, and other components. The shape of the end cap 2112 may be adapted to the shape of the housing 211. For example, if the shell 2111 is a rectangular cuboid structure, the end cap 2112 is a rectangular plate-shaped structure adapted to the housing 211. For another example, if the shell 2111 is a cylindrical structure, the end cap 2112 is a circular plate-shaped structure adapted to the shell 2111. The material of the end cap 2112 may also be various, such as copper, iron, aluminum, steel, aluminum alloy, plastic, or the like, and the material of the end cap 2112 may be the same as or different from that of the shell 2111.

In an embodiment where the shell 2111 has an opening formed at one end, one end cap 2112 may be correspondingly provided. In an embodiment where the shell 2111 has openings formed at opposite ends, two end caps 2112 may be correspondingly provided, with the two end caps 2112 respectively closing the two openings of the shell 2111, and the two end caps 2112 together with the shell 2111 defining an accommodation space.

The electrode terminals 212 are components in the battery cell 21 configured to input or output electric energy. The electrode terminals 212 are disposed on the housing 211, and the electrode terminals 212 are configured to be electrically connected to tabs 2131 of the electrode assembly 213. The electrode terminals 212 may be disposed on the shell 2111 of the housing 211 or on the end cap 2112 of the housing 211. The electrode terminals 212 and the tabs 2131 may be directly connected, for example, the electrode terminals 212 are directly welded to the tabs 2131. Alternatively, the electrode terminals 212 and the tabs 2131 may be indirectly connected through a current collecting member, which may be a metal conductor, such as copper, iron, aluminum, steel, aluminum alloy, or the like.

As an example, as shown in FIG. 7, the shell 2111 is a hollow structure with an opening formed at one end, the housing 211 includes only one end cap 2112, the end cap 2112 closes the opening of the shell 2111, two electrode terminals 212 are provided on the end cap 2112, the electrode terminals 212 partially protrude from an outer surface of the end cap 2112, one end of the electrode assembly 213 facing the end cap 2112 is formed with a positive tab 2131 and a negative tab 2131, and the positive tab 2131 and the negative tab 2131 are respectively electrically connected to the two electrode terminals 212.

Taking the housing 211 of the battery cell 21 as a rectangular cuboid as an example, the housing 211 has a length direction, a width direction, and a height direction, the length of the housing 211 is greater than or equal to the width of the housing 211, and the electrode terminals 212 are located at one end of the housing 211 in the height direction. After the battery 2 is accommodated in the battery compartment 11, one of the length direction, width direction, and height direction of the housing 211 may be parallel to the length direction X of the enclosure, another may be parallel to the width direction Y of the enclosure, and yet another may be parallel to the height direction Z of the enclosure.

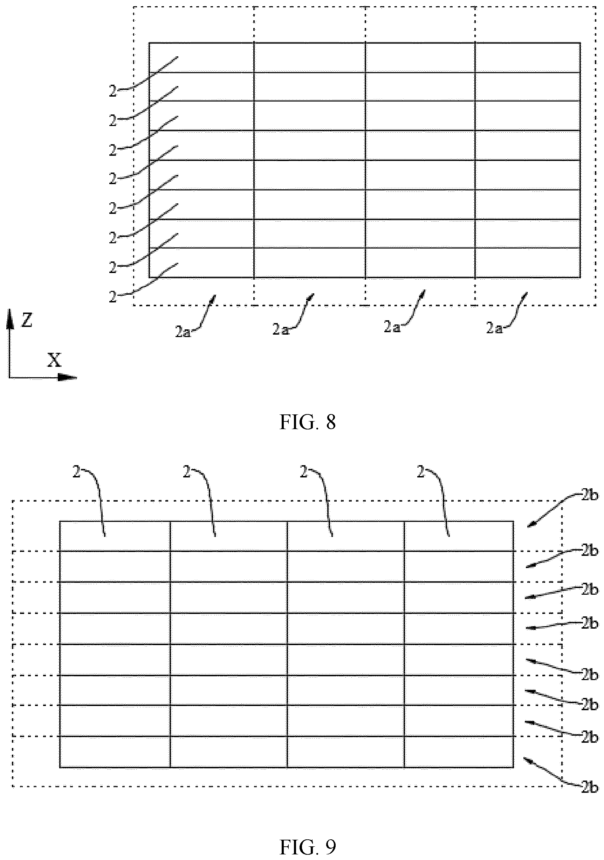

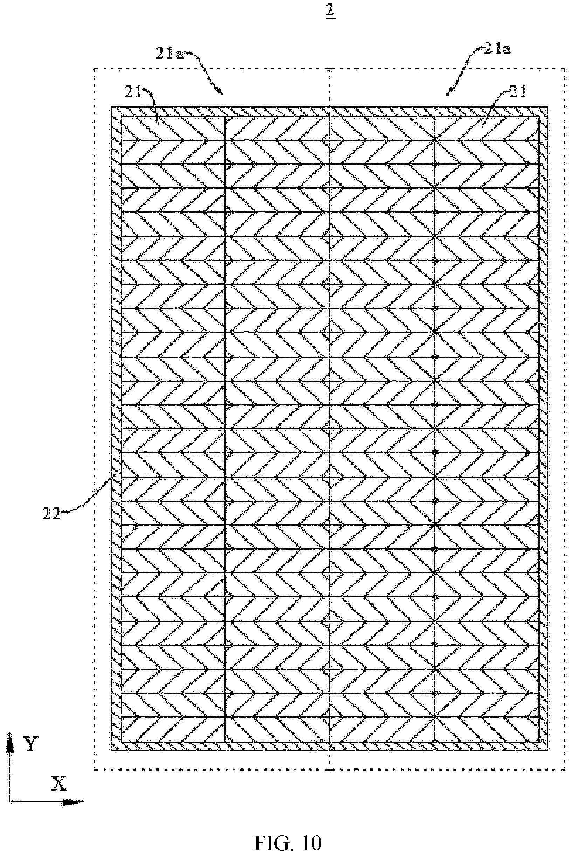

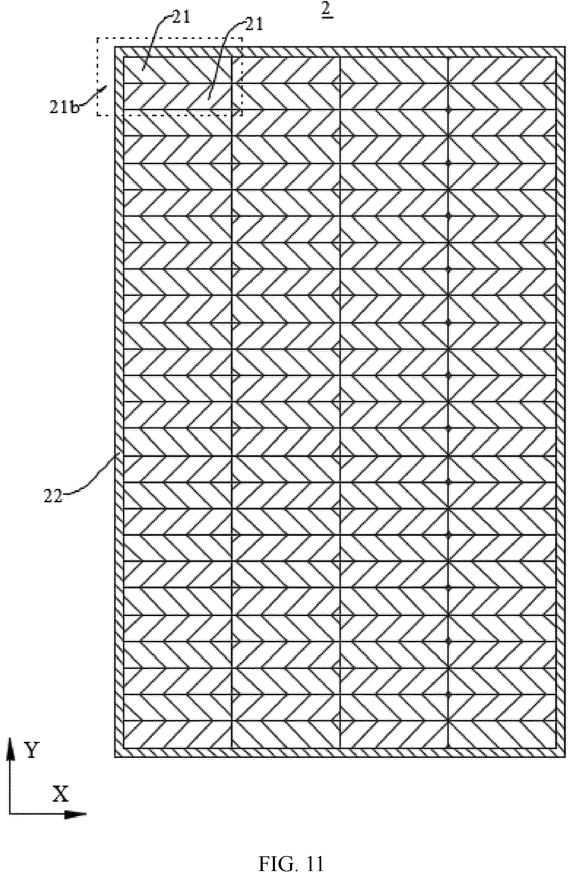

In some embodiments, referring to FIG. 8 to FIG. 10, FIG. 8 is a layout diagram of batteries 2 in the battery compartment 11 shown in FIG. 3; FIG. 9 is a layout diagram of batteries 2 in a battery compartment 11 provided by some other embodiments of this application; FIG. 10 is a schematic structural diagram of a battery 2 according to some embodiments of this application; and FIG. 11 is a schematic structural diagram of a battery 2 according to some other embodiments of this application. The battery compartment 11 accommodates N₁ batteries 2, the N₁ batteries 2 are formed by X₁ first battery packs 2a connected in parallel, each first battery pack 2a is formed by Y₁ batteries 2 connected in series; alternatively, the N₁ batteries 2 are formed by Y₁ second battery packs 2b connected in series, each second battery pack 2b is formed by X₁ batteries 2 connected in parallel, satisfying: N₁ ≥ 1, X₁ ≥ 1, Y₁ ≥ 1, and N₁ = X₁ * Y₁. The battery 2 includes N₂ battery cells 21, the N₂ battery cells 21 are formed by X₂ first battery cell groups 21a connected in parallel, each first battery cell group 21a is formed by Y₂ battery cells 21 connected in series; alternatively, the N₂ battery cells 21 are formed by Y₂ second battery cell groups 21b connected in series, each second battery cell group 21b is formed by X₂ battery cells 21 connected in parallel, satisfying: N₂ ≥ 1, X₂ ≥ 1, Y₂ ≥ 1, N₂ = X₂ * Y₂, and N = N₁ * N₂.

X₁ is the number of parallel connections of batteries 2 in the battery compartment 11, and Y₁ is the number of series connections of batteries 2 in the battery compartment 11. X₂ is the number of parallel connections of battery cells 21 in the battery 2, and Y₂ is the number of series connections of battery cells 21 in the battery 2. N₁, N₂, X₂, and Y₂ are integers greater than or equal to 1.

If X₁ = 1, the N₁ batteries 2 being formed by X₁ first battery packs 2a connected in parallel is equivalent to the N₁ batteries 2 being formed by one first battery pack 2a; and each second battery pack 2b being formed by X₁ batteries 2 connected in parallel is equivalent to each second battery pack 2b being formed by one battery 2. If Y₁ = 1, each first battery pack 2a being formed by Y₁ batteries 2 connected in series is equivalent to each first battery pack 2a being formed by one battery 2; and the N₁ batteries 2 being formed by Y₁ second battery packs 2b connected in series is equivalent to the N₁ batteries 2 being formed by one second battery pack 2b.

If X₂ = 1, the N₂ battery cells 21 being formed by X₂ first battery cell groups 21a connected in parallel is equivalent to the N₂ battery cells 21 being formed by one first battery cell group 21a; and each second battery cell group 21b being formed by X₂ battery cells 21 connected in parallel is equivalent to each second battery cell group 21b being formed by one battery cell 21. If Y₂ = 1, each first battery cell group 21a being formed by Y₂ battery cells 21 connected in series is equivalent to each first battery cell group 21a being formed by one battery cell 21; and the N₂ battery cells 21 being formed by Y₂ second battery cell groups 21b connected in series is equivalent to the N₂ battery cells 21 being formed by one second battery cell group 21b.

In the embodiment shown in FIG. 8, the N₁ batteries 2 are formed by X₁ first battery packs 2a connected in parallel, each first battery pack 2a is formed by Y₁ batteries 2 connected in series. As an example, X₁ = 4, Y₁ = 8.

In the embodiment shown in FIG. 9, the N₁ batteries 2 are formed by Y₁ second battery packs 2b connected in series, each second battery pack 2b is formed by X₁ batteries 2 connected in parallel. As an example, X₁ = 4, Y₁ = 8.

In the embodiment shown in FIG. 10, the N₂ battery cells 21 are formed by X₂ first battery cell groups 21a connected in parallel, and each first battery cell group 21a is formed by Y₂ battery cells 21 connected in series. The battery cells 21 in the battery box 22 are provided in plurality, the plurality of battery cells 21 are distributed in an array, each row of battery cells 21 is arranged along the length direction X of the enclosure, and each column of battery cells 21 is arranged along the width direction Y of the enclosure. As an example, all battery cells 21 in every two columns of battery cells 21 are connected in series to form one first battery cell group 21a. Specifically, the battery cells 21 in the battery box 22 are arranged in 26 rows and 4 columns, X₂ = 2, and Y₂ = 52.

In the embodiment shown in FIG. 11, the N₂ battery cells 21 are formed by Y₂ second battery cell groups 21b connected in series, each second battery cell group 21b is formed by X₂ battery cells 21 connected in parallel. The battery cells 21 in the battery box 22 are provided in plurality, the plurality of battery cells 21 are distributed in an array, each row of battery cells 21 is arranged along the length direction X of the enclosure, and each column of battery cells 21 is arranged along the width direction Y of the enclosure. As an example, in each column of battery cells 21, every two battery cells 21 are connected in parallel to form one second battery cell group 21b. Specifically, the battery cells 21 in the battery box 22 are arranged in 26 rows and 4 columns, X₂ = 2, and Y₂ = 52.

In the embodiments, for the N₁ batteries 2 in the battery compartment 11, Y₁ batteries 2 may first be connected in series to form a first battery pack 2a, followed by X₁ first battery packs 2a connected in parallel; alternatively, X₁ batteries 2 may first be connected in parallel to form a second battery pack 2b, followed by Y₁ second battery packs 2b connected in series. For the N₂ battery cells 21 in the battery 2, Y₂ battery cells 21 may first be connected in series to form a first battery cell group 21a, followed by X₂ first battery cell groups 21a connected in parallel; alternatively, X₂ battery cells 21 may first be connected in parallel to form a second battery cell group 21b, followed by Y₂ second battery cell groups 21b connected in series. The number Y₁ of series connections of batteries 2 in the battery compartment 11 and the number Y₂ of series connections of battery cells 21 in the battery 2 can be set according to requirements to adjust the voltage of the energy storage apparatus 10 to a reasonable range.

In some embodiments, under the condition of charging the energy storage apparatus 10, a maximum operating voltage on a direct current side of the power conversion system 20 is U₁, and a minimum operating voltage on the direct current side of the power conversion system 20 is U₂, satisfying: U₂ < U₀ * Y₁ * Y₂ < U₁.

When an external device charges the energy storage apparatus 10 through the power conversion system 20, the operating voltage on the direct current side of the power conversion system 20 gradually changes with the charging state of the energy storage apparatus 10, for example, the operating voltage on the direct current side of the power conversion system 20 gradually increases. U₁ is the maximum operating voltage of the power conversion system 20 under charging conditions, and U₂ is the minimum operating voltage of the power conversion system 20 under charging conditions.

Here, U₀ * Y₁ * Y₂ is the voltage of the energy storage apparatus 10.

In the embodiments, with U₀ * Y₁ * Y₂ < U₁, an external device can normally charge the energy storage apparatus 10 through the power conversion system 20; and with U₀ * Y₁ * Y₂ > U₂, the energy storage apparatus 10 can supply power to the external device through the power conversion system 20. Thus, controlling U₀ * Y₁ * Y₂ within the range of U₂ to U₁ ensures that the voltage of the power conversion system 20 is compatible with the voltage of the power conversion system 20, enabling both charging of the energy storage apparatus 10 by the external device through the power conversion system 20 and power supply from the energy storage apparatus 10 to the external device through the power conversion system 20.

In some embodiments, a positive electrode material of the battery cell 21 includes lithium-containing phosphate, 2.8 V ≤ U₀ ≤ 3.6 V, and 250 ≤ Y₁ * Y₂ ≤ 468.

Lithium-containing phosphate includes but is not limited to at least one of lithium iron phosphate (for example, LiFePO4 (also abbreviated as LFP)), a composite material of lithium iron phosphate and carbon, lithium manganese phosphate (for example, LiMnPO4), a composite material of lithium manganese phosphate and carbon, lithium manganese iron phosphate, or a composite material of lithium manganese iron phosphate and carbon.

In the embodiments, U₀ may be a specific value such as 2.8 V, 2.9 V, 3 V, 3.1 V, 3.2 V, 3.3 V, 3.4 V, 3.5 V, 3.6 V, or a range between any two of these values. Y₁ * Y₂ may be a specific value such as 250, 256, 280, 288, 300, 304, 320, 336, 360, 384, 400, 416, 440, 468, or a range between any two of these values.

In the embodiments, when the positive electrode material of the battery cell 21 includes lithium-containing phosphate, 2.8 V ≤ U₀ ≤ 3.6 V, and 250 ≤ Y₁ * Y₂ ≤ 468, and the voltage of the power conversion system 20 can be controlled within a reasonable range, ensuring that the voltage of the energy storage apparatus 10 is neither too low, allowing compatibility with a power conversion system 20 having a higher operating voltage, nor too high, reducing the operating voltage requirements of the power conversion system 20 and lowering production costs.

In some embodiments, the positive electrode material of the battery cell 21 includes lithium iron phosphate, 3.1 V ≤ U₀ ≤ 3.3 V, and 400 ≤ Y₁ * Y₂ ≤ 424.

In the embodiments, U₀ may be a specific value such as 3.1 V, 3.13 V, 3.15 V, 3.18 V, 3.2 V, 3.23 V, 3.25 V, 3.28 V, 3.3 V, or a range between any two of these values. Y₁ * Y₂ may be a specific value such as 400, 404, 408, 412, 416, 420, 424, or a range between any two of these values.

In the embodiments, when the positive electrode material of the battery cell 21 includes lithium iron phosphate, 3.1 V ≤ U₀ ≤ 3.3 V, and 400 ≤ Y₁ * Y₂ ≤ 424, the voltage of the power conversion system 20 can be controlled within a reasonable range.

In some embodiments, 3.5 * 10⁶ W ≤ P ≤ 7.5 * 10⁶ W, M = A, and 1 ≤ X₁ * X₂ ≤ 18.

P may be a specific value such as 3.5 * 10⁶ W, 3.75 * 10⁶ W, 4 * 10⁶ W, 4.2 * 10⁶ W, 4.5 * 10⁶ W, 4.9 * 10⁶ W, 5 * 10⁶ W, 5.2 * 10⁶ W, 5.5 * 10⁶ W, 5.8 * 10⁶ W, 6 * 10⁶ W, 6.2 * 10⁶ W, 6.8 * 10⁶ W, 7 * 10⁶ W, 7.2 * 10⁶ W, 7.5 * 10⁶ W, or a range between any two of these values. X₁ * X₂ may be 1, 2, 3, 4, 5, 6, 7, 8, 9, 10, 11, 12, 13, 14, 15, 16, 17, or 18.

In the embodiments, when the positive electrode material of the battery cell 21 includes lithium-containing phosphate, 3.5 * 10⁶ W ≤ P ≤ 7.5 * 10⁶ W, and M = A, X₁ * X₂ can be set within the range of 1 to 18 to control the capacity of the battery cell 21 within a reasonable range.

In some embodiments, X₁ = 1.

It can be understood that in an embodiment where the battery compartment 11 accommodates a plurality of batteries 2, all batteries 2 in the battery compartment 11 are connected in series.

In the embodiments, the positive electrode material of the battery cell 21 includes lithium-containing phosphate, and X₂ may be 1, 2, 3, 4, 5, 6, 7, 8, 9, 10, 11, 12, 13, 14, 15, 16, 17, or 18.

In some embodiments, X₂ = 1, 2000 Ah ≤ C ≤ 11000 Ah.

In the embodiments, X₁ = 1, X₂ = 1, and C may be a specific value such as 2000 Ah, 3000 Ah, 4000 Ah, 5000 Ah, 6000 Ah, 7000 Ah, 8000 Ah, 9000 Ah, 10000 Ah, 11000 Ah, or a range between any two of these values.

In the embodiments, when the positive electrode material of the battery cell 21 includes lithium-containing phosphate, and both the number X₁ of parallel connections of batteries 2 in the battery compartment 11 and the number X₂ of parallel connections of battery cells 21 in the battery 2 are 1, setting the capacity of the battery cell 21 within the range of 2000 Ah to 11000 Ah satisfies both the power matching requirements and the voltage requirements of the energy storage apparatus 10.

In some embodiments, 2500 Ah ≤ C ≤ 6000 Ah.

In the embodiments, X₁ = 1, and X₂ = 1. C may be a specific value such as 2500 Ah, 2800 Ah, 3000 Ah, 3300 Ah, 3500 Ah, 3800 Ah, 4000 Ah, 4300 Ah, 4500 Ah, 4800 Ah, 5000 Ah, 5300 Ah, 5500 Ah, 5800 Ah, 6000 Ah, or a range between any two of these values.

In some embodiments, X₂ = 2, and 1000 Ah ≤ C ≤ 5500 Ah.

In the embodiments, X₁ = 1, and X₂ = 2. C may be a specific value such as 1000 Ah, 1500 Ah, 2000 Ah, 2500 Ah, 3000 Ah, 3500 Ah, 4000 Ah, 4500 Ah, 5000 Ah, or a range between any two of these values.

When the positive electrode material of the battery cell 21 includes lithium-containing phosphate, the number X₁ of parallel connections of batteries 2 in the battery compartment 11 is 1, and the number X₂ of parallel connections of battery cells 21 in the battery 2 is 2, setting the capacity of the battery cell 21 within the range of 1000 Ah to 5500 Ah satisfies both the power matching requirements and the voltage requirements of the energy storage apparatus 10.

In some embodiments, 2000 Ah ≤ C ≤ 4000 Ah.

In the embodiments, X₁ = 1, and X₂ = 2. C may be a specific value such as 2000 Ah, 2100 Ah, 2200 Ah, 2300 Ah, 2400 Ah, 2500 Ah, 2600 Ah, 2700 Ah, 2800 Ah, 2900 Ah, 3000 Ah, 3100 Ah, 3200 Ah, 3300 Ah, 3400 Ah, 3500 Ah, 3600 Ah, 3700 Ah, 3800 Ah, 3900 Ah, 4000 Ah, or a range between any two of these values.

In some embodiments, 2 ≤ X₁ ≤ 6.

In the embodiments, X₁ may be 2, 3, 4, 5, or 6.

In the embodiments, the positive electrode material of the battery cell 21 includes lithium-containing phosphate, and controlling the number X₁ of parallel connections of batteries 2 in the battery compartment 11 within a reasonable range, with X₁ ≥ 2, ensures that the capacity of the battery cell 21 is not excessively large, reducing the manufacturing difficulty and cost of the battery cell 21, and with X₁ ≤ 6, ensures that the number X₁ of parallel connections of batteries 2 in the battery compartment 11 is not excessive, facilitating improved space utilization of the battery compartment 11.

In some embodiments, X₁ = 4, X₂ = 1, and 500 Ah ≤ C ≤ 2600 Ah.

In the embodiments, C may be a specific value such as 500 Ah, 800 Ah, 1000 Ah, 1300 Ah, 1500 Ah, 1800 Ah, 2000 Ah, 2300 Ah, 2500 Ah, 2600 Ah, or a range between any two of these values.

In the embodiments, when the positive electrode material of the battery cell 21 includes lithium-containing phosphate, and X₁ = 4, X₂ = 1, setting the capacity of the battery cell 21 within the range of 500 Ah to 2600 Ah satisfies both the power matching requirements and the voltage requirements of the energy storage apparatus 10.

In some embodiments, 800 Ah ≤ C ≤ 1500 Ah.

In the embodiments, X₁ = 4, X₂ = 1, and C may be a specific value such as 800 Ah, 900 Ah, 1000 Ah, 1100 Ah, 1200 Ah, 1300 Ah, 1400 Ah, 1500 Ah, or a range between any two of these values.

In some embodiments, X₁ = 4, X₂ = 2, and 250 Ah ≤ C ≤ 1300 Ah.

In the embodiments, C may be a specific value such as 250 Ah, 300 Ah, 400 Ah, 500 Ah, 600 Ah, 700 Ah, 800 Ah, 900 Ah, 1000 Ah, 1100 Ah, 1200 Ah, 1300 Ah, or a range between any two of these values.

In the embodiments, when the positive electrode material of the battery cell 21 includes lithium-containing phosphate, and X₁ = 4, X₂ = 2, setting the capacity of the battery cell 21 within the range of 800 Ah to 1500 Ah satisfies both the power matching requirements and the voltage requirements of the energy storage apparatus 10.

In some embodiments, 350 Ah ≤ C ≤ 1000 Ah.

In the embodiments, the positive electrode material of the battery cell 21 includes lithium-containing phosphate, X₁ = 4, X₂ = 2, and C may be a specific value such as 350 Ah, 400 Ah, 450 Ah, 500 Ah, 550 Ah, 600 Ah, 650 Ah, 700 Ah, 750 Ah, 800 Ah, 850 Ah, 900 Ah, 950 Ah, 1000 Ah, or a range between any two of these values.

In some embodiments, 500 Ah ≤ C ≤ 700 Ah.

In the embodiments, the positive electrode material of the battery cell 21 includes lithium-containing phosphate, X₁ = 4, X₂ = 2, and C may be a specific value such as 500 Ah, 530 Ah, 550 Ah, 580 Ah, 588 Ah, 600 Ah, 630 Ah, 650 Ah, 680 Ah, 700 Ah, or a range between any two of these values.

In some embodiments, the positive electrode material of the battery cell 21 includes lithium transition metal oxide, 2.8 V ≤ U₀ ≤ 4.35 V, and 210 ≤ Y₁ * Y₂ ≤ 530.

Lithium transition metal oxide includes but is not limited to at least one of lithium cobalt oxide (for example, LiCoO₂), lithium nickel oxide (for example, LiNiO₂), lithium manganese oxide (for example, LiMnO₂, LiMn2O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (for example, LiNi_{0.85}Co_{0.15}Al_{0.05}O₂), and their modified compounds.

In the embodiments, U₀ may be a specific value such as 2.8 V, 2.9 V, 3 V, 3.1 V, 3.2 V, 3.3 V, 3.4 V, 3.5 V, 3.6 V, 3.7 V, 3.8 V, 3.9 V, 4 V, 4.1 V, 4.2 V, 4.3 V, 4.35 V, or a range between any two of these values. Y₁ * Y₂ may be a specific value such as 210, 224, 240, 250, 256, 280, 288, 300, 304, 320, 336, 360, 384, 400, 416, 440, 468, 480, 496, 512, 530, or a range between any two of these values.

In the embodiments, when the positive electrode material of the battery cell 21 includes lithium transition metal oxide, 2.8 V ≤ U₀ ≤ 4.35 V, and 210 ≤ Y₁ * Y₂ ≤ 530, the voltage of the power conversion system 20 can be controlled within a reasonable range, ensuring that the voltage of the energy storage apparatus 10 is neither too low, allowing compatibility with a power conversion system 20 having a higher operating voltage, nor too high, reducing the operating voltage requirements of the power conversion system 20 and lowering production costs.

In some embodiments, 3.5 * 10⁶ W ≤ P ≤ 7.5 * 10⁶ W, M = A, and 1 ≤ X₁ * X₂ ≤ 18.

In the embodiments, P may be a specific value such as 3.5 * 10⁶ W, 3.75 * 10⁶ W, 4 * 10⁶ W, 4.2 * 10⁶ W, 4.5 * 10⁶ W, 4.9 * 10⁶ W, 5 * 10⁶ W, 5.2 * 10⁶ W, 5.5 * 10⁶ W, 5.8 * 10⁶ W, 6 * 10⁶ W, 6.2 * 10⁶ W, 6.8 * 10⁶ W, 7 * 10⁶ W, 7.2 * 10⁶ W, 7.5 * 10⁶ W, or a range between any two of these values. X₁ * X₂ may be 1, 2, 3, 4, 5, 6, 7, 8, 9, 10, 11, 12, 13, 14, 15, 16, 17, or 18.

In the embodiments, when the positive electrode material of the battery cell 21 includes lithium transition metal oxide, 3.5 * 10⁶ W ≤ P ≤ 7.5 * 10⁶ W, and M = A, X₁ * X₂ can be set within the range of 1 to 18 to control the capacity of the battery cell 21 within a reasonable range.

In some embodiments, X₁ = 1.

In the embodiments, the positive electrode material of the battery cell 21 includes lithium transition metal oxide, and X₂ may be 1, 2, 3, 4, 5, 6, 7, 8, 9, 10, 11, 12, 13, 14, 15, 16, 17, or 18.

In some embodiments, X₂ = 1, and 1500 Ah ≤ C ≤ 13400 Ah.

In the embodiments, X₁ = 1, X₂ = 1, and C may be a specific value such as 1500 Ah, 1800 Ah, 2000 Ah, 3000 Ah, 4000 Ah, 5000 Ah, 6000 Ah, 7000 Ah, 8000 Ah, 9000 Ah, 10000 Ah, 11000 Ah, 12000 Ah, 13000 Ah, 13400 Ah, or a range between any two of these values.

When the positive electrode material of the battery cell 21 includes lithium transition metal oxide, and both the number X₁ of parallel connections of batteries 2 in the battery compartment 11 and the number X₂ of parallel connections of battery cells 21 in the battery 2 are 1, setting the capacity of the battery cell 21 within the range of 1500 Ah to 13400 Ah satisfies both the power matching requirements and the voltage requirements of the energy storage apparatus 10.

In some embodiments, 3000 Ah ≤ C ≤ 7000 Ah.

In the embodiments, the positive electrode material of the battery cell 21 includes lithium transition metal oxide, X₁ = 1, and X₂ = 1. C may be a specific value such as 3000 Ah, 3300 Ah, 3500 Ah, 3800 Ah, 4000 Ah, 4300 Ah, 4500 Ah, 4800 Ah, 5000 Ah, 5300 Ah, 5500 Ah, 5800 Ah, 6000 Ah, 6300 Ah, 6500 Ah, 6800 Ah, 7000 Ah, or a range between any two of these values.

In some embodiments, X₂ = 2, and 750 Ah ≤ C ≤ 6670 Ah.

In the embodiments, the positive electrode material of the battery cell 21 includes lithium transition metal oxide, X₁ = 1, and X₂ = 2. C may be a specific value such as 750 Ah, 850 Ah, 1000 Ah, 1500 Ah, 2000 Ah, 2500 Ah, 3000 Ah, 3500 Ah, 4000 Ah, 4500 Ah, 5000 Ah, 5500 Ah, 6000 Ah, 6500 Ah, 6670 Ah, or a range between any two of these values.

When the positive electrode material of the battery cell 21 includes lithium transition metal oxide, the number X₁ of parallel connections of batteries 2 in the battery compartment 11 is 1, and the number X₂ of parallel connections of battery cells 21 in the battery 2 is 2, setting the capacity of the battery cell 21 within the range of 750 Ah to 6670 Ah satisfies both the power matching requirements and the voltage requirements of the energy storage apparatus 10.

In some embodiments, 1800 Ah ≤ C ≤ 4000 Ah.

In the embodiments, the positive electrode material of the battery cell 21 includes lithium transition metal oxide, X₁ = 1, and X₂ = 2. C may be a specific value such as 1800 Ah, 1900 Ah, 2000 Ah, 2100 Ah, 2200 Ah, 2300 Ah, 2400 Ah, 2500 Ah, 2600 Ah, 2700 Ah, 2800 Ah, 2900 Ah, 3000 Ah, 3100 Ah, 3200 Ah, 3300 Ah, 3400 Ah, 3500 Ah, 3600 Ah, 3700 Ah, 3800 Ah, 3900 Ah, 4000 Ah, or a range between any two of these values.

In some embodiments, 2 ≤ X₁ ≤ 6.

In the embodiments, X₁ may be 2, 3, 4, 5, or 6.

In the embodiments, the positive electrode material of the battery cell 21 includes lithium transition metal oxide, controlling the number X₁ of parallel connections of batteries 2 in the battery compartment 11 within a reasonable range ensures that the capacity of the battery cell 21 is not excessively large, reducing the manufacturing difficulty and cost of the battery cell 21, and prevents an excessive number X₁ of parallel connections of batteries 2 in the battery compartment 11, facilitating improved space utilization of the battery compartment 11.

In some embodiments, X₁ = 4, X₂ = 1, and 375 Ah ≤ C ≤ 3300 Ah.

In the embodiments, the positive electrode material of the battery cell 21 includes lithium transition metal oxide, and C may be a specific value such as 375 Ah, 500 Ah, 800 Ah, 1000 Ah, 1300 Ah, 1500 Ah, 1800 Ah, 2000 Ah, 2300 Ah, 2500 Ah, 2600 Ah, 2800 Ah, 3000 Ah, 3150 Ah, 3300 Ah, or a range between any two of these values.

In the embodiments, when the positive electrode material of the battery cell 21 includes lithium transition metal oxide, and X₁ = 4, X₂ = 1, setting the capacity of the battery cell 21 within the range of 375 Ah to 3300 Ah satisfies both the power matching requirements and the voltage requirements of the energy storage apparatus 10.

In some embodiments, 700 Ah ≤ C ≤ 1600 Ah.

In the embodiments, the positive electrode material of the battery cell 21 includes lithium transition metal oxide, X₁ = 4, X₂ = 1, and C may be a specific value such as 700 Ah, 800 Ah, 900 Ah, 1000 Ah, 1100 Ah, 1200 Ah, 1300 Ah, 1400 Ah, 1500 Ah, 1600 Ah, or a range between any two of these values.

In some embodiments, X₁ = 4, X₂ = 2, and 200 Ah ≤ C ≤ 1600 Ah.

In the embodiments, C may be a specific value such as 200 Ah, 300 Ah, 400 Ah, 500 Ah, 600 Ah, 700 Ah, 800 Ah, 900 Ah, 1000 Ah, 1100 Ah, 1200 Ah, 1300 Ah, 1400 Ah, 1500Ah, 1600 Ah, or a range between any two of these values.

In the embodiments, when the positive electrode material of the battery cell 21 includes lithium transition metal oxide, and X₁ = 4, X₂ = 2, setting the capacity of the battery cell 21 within the range of 200 Ah to 1600 Ah satisfies both the power matching requirements and the voltage requirements of the energy storage apparatus 10.

In some embodiments, 340 Ah ≤ C ≤ 1050 Ah.

In the embodiments, the positive electrode material of the battery cell 21 includes lithium transition metal oxide, X₁ = 4, X₂ = 2, and C may be a specific value such as 340 Ah, 400 Ah, 450 Ah, 500 Ah, 550 Ah, 600 Ah, 650 Ah, 700 Ah, 750 Ah, 800 Ah, 850 Ah, 900 Ah, 950 Ah, 1000 Ah, 1050 Ah, or a range between any two of these values.

In some embodiments, 490 Ah ≤ C ≤ 720 Ah.

In the embodiments, the positive electrode material of the battery cell 21 includes lithium transition metal oxide, X₁ = 4, X₂ = 2, and C may be a specific value such as 490 Ah, 500 Ah, 530 Ah, 550 Ah, 572 Ah, 580 Ah, 600 Ah, 630 Ah, 650 Ah, 680 Ah, 700 Ah, 720 Ah, or a range between any two of these values.

In some embodiments, the battery cell 21 is a sodium-ion battery cell, 1.5 V ≤ U₀ ≤ 4 V, and 230 ≤ Y₁ * Y₂ ≤ 1000.

In the embodiments, U₀ may be a specific value such as 1.5 V, 1.6 V, 1.7 V, 1.8 V, 1.9 V, 2 V, 2.1 V, 2.2 V, 2.3 V, 2.4 V, 2.5 V, 2.6 V, 2.7 V, 2.8 V, 2.9 V, 3 V, 3.1 V, 3.2 V, 3.3 V, 3.4 V, 3.5 V, 3.6 V, 3.7 V, 3.8 V, 3.9 V, 4 V, or a range between any two of these values. Y₁ * Y₂ may be a specific value such as 230, 240, 250, 256, 280, 288, 300, 304, 320, 336, 360, 384, 400, 416, 440, 468, 480, 496, 512, 530, 560, 600, 640, 680, 720, 760, 800, 840, 880, 920, 960, 1000, or a range between any two of these values.

When the battery cell 21 is a sodium-ion battery cell, 1.5 V ≤ U₀ ≤ 4 V, and 230 ≤ Y₁ * Y₂ ≤ 1000, the voltage of the power conversion system 20 can be controlled within a reasonable range, ensuring that the voltage of the energy storage apparatus 10 is neither too low, allowing compatibility with a power conversion system 20 having a higher operating voltage, nor too high, reducing the operating voltage requirements of the power conversion system 20 and lowering production costs.

In some embodiments, 3.5 * 10⁶ W ≤ P ≤ 7.5 * 10⁶ W, M = A, and 1 ≤ X₁ * X₂ ≤ 18.

In the embodiments, P may be a specific value such as 3.5 * 10⁶ W, 3.75 * 10⁶ W, 4 * 10⁶ W, 4.2 * 10⁶ W, 4.5 * 10⁶ W, 4.9 * 10⁶ W, 5 * 10⁶ W, 5.2 * 10⁶ W, 5.5 * 10⁶ W, 5.8 * 10⁶ W, 6 * 10⁶ W, 6.2 * 10⁶ W, 6.8 * 10⁶ W, 7 * 10⁶ W, 7.2 * 10⁶ W, 7.5 * 10⁶ W, or a range between any two of these values. X₁ * X₂ may be 1, 2, 3, 4, 5, 6, 7, 8, 9, 10, 11, 12, 13, 14, 15, 16, 17, or 18.

When the battery cell 21 is a sodium-ion battery cell, 3.5 * 10⁶ W ≤ P ≤ 7.5 * 10⁶ W, and M = A, X₁ * X₂ can be set within the range of 1 to 18 to control the capacity of the battery cell 21 within a reasonable range.

In some embodiments, X₁ = 1.

In the embodiments, the battery cell 21 is a sodium-ion battery cell, and X₂ may be 1, 2, 3, 4, 5, 6, 7, 8, 9, 10, 11, 12, 13, 14, 15, 16, 17, or 18.

In some embodiments, X₂ = 1, and 1200 Ah ≤ C ≤ 18000 Ah.

In the embodiments, X₁ = 1, X₂ = 1, and C may be a specific value such as 1200 Ah, 1500 Ah, 1800 Ah, 2000 Ah, 3000 Ah, 4000 Ah, 5000 Ah, 6000 Ah, 7000 Ah, 8000 Ah, 9000 Ah, 10000 Ah, 11000 Ah, 12000 Ah, 13000 Ah, 14000 Ah, 15000 Ah, 16000 Ah, 17000 Ah, 18000 Ah, or a range between any two of these values.

When the battery cell 21 is a sodium-ion battery cell, and both the number X₁ of parallel connections of batteries 2 in the battery compartment 11 and the number X₂ of parallel connections of battery cells 21 in the battery 2 are 1, setting the capacity of the battery cell 21 within the range of 1200 Ah to 18000 Ah satisfies both the power matching requirements and the voltage requirements of the energy storage apparatus 10.

In some embodiments, 2000 Ah ≤ C ≤ 10000 Ah.

In the embodiments, the battery cell 21 is a sodium-ion battery cell, X₁ = 1, and X₂ = 1. C may be a specific value such as 2000 Ah, 2300 Ah, 2500 Ah, 2800 Ah, 3000 Ah, 3300 Ah, 3500 Ah, 3800 Ah, 4000 Ah, 4300 Ah, 4500 Ah, 4800 Ah, 5000 Ah, 5300 Ah, 5500 Ah, 5800 Ah, 6000 Ah, 6300 Ah, 6500 Ah, 6800 Ah, 7000 Ah, 8000 Ah, 9000 Ah, 10000 Ah, or a range between any two of these values.

In some embodiments, X₂ = 2, 600 Ah ≤ C ≤ 9000 Ah.

In the embodiments, the battery cell 21 is a sodium-ion battery cell, X₁ = 1, and X₂ = 2. C may be a specific value such as 600 Ah, 650 Ah, 700 Ah, 750 Ah, 850 Ah, 1000 Ah, 1500 Ah, 2000 Ah, 2500 Ah, 3000 Ah, 3500 Ah, 4000 Ah, 4500 Ah, 5000 Ah, 5500 Ah, 6000 Ah, 6500 Ah, 7000 Ah, 7500 Ah, 8000 Ah, 8500 Ah, 9000 Ah, or a range between any two of these values.

When the battery cell 21 is a sodium-ion battery cell, the number X₁ of parallel connections of batteries 2 in the battery compartment 11 is 1, and the number X₂ of parallel connections of battery cells 21 in the battery 2 is 2, setting the capacity of the battery cell 21 within the range of 600 Ah to 9000 Ah satisfies both the power matching requirements and the voltage requirements of the energy storage apparatus 10.

In some embodiments, 1600 Ah ≤ C ≤ 4000 Ah.

In the embodiments, the battery cell 21 is a sodium-ion battery cell, X₁ = 1, and X₂ = 2. C may be a specific value such as 1600 Ah, 1700 Ah, 1800 Ah, 1900 Ah, 2000 Ah, 2100 Ah, 2200 Ah, 2300 Ah, 2400 Ah, 2500 Ah, 2600 Ah, 2700 Ah, 2800 Ah, 2900 Ah, 3000 Ah, 3100 Ah, 3200 Ah, 3300 Ah, 3400 Ah, 3500 Ah, 3600 Ah, 3700 Ah, 3800 Ah, 3900 Ah, 4000 Ah, or a range between any two of these values.

In some embodiments, 2 ≤ X₁ ≤ 6.

In the embodiments, X₁ may be 2, 3, 4, 5, or 6.

In the embodiments, controlling the number X₁ of parallel connections of batteries 2 in the battery compartment 11 within a reasonable range ensures that the capacity of the battery cell 21 is not excessively large, reducing the manufacturing difficulty and cost of the battery cell 21, and prevents an excessive number X₁ of parallel connections of batteries 2 in the battery compartment 11, facilitating improved space utilization of the battery compartment 11.

In some embodiments, X₁ = 4, X₂ = 1, and 300 Ah ≤ C ≤ 4000 Ah.

In the embodiments, the battery cell 21 is a sodium-ion battery cell, and C may be a specific value such as 300 Ah, 375Ah, 400 Ah, 500 Ah, 800 Ah, 1000 Ah, 1300 Ah, 1500Ah, 1800 Ah, 2000 Ah, 2300 Ah, 2500 Ah, 2600 Ah, 2800 Ah, 3000 Ah, 3150 Ah, 3300 Ah, 3500 Ah, 3700 Ah, 3900 Ah, 4000 Ah, or a range between any two of these values.

When the battery cell 21 is a sodium-ion battery cell, and X₁ = 4, X₂ = 1, setting the capacity of the battery cell 21 within the range of 300 Ah to 4000 Ah satisfies both the power matching requirements and the voltage requirements of the energy storage apparatus 10.

In some embodiments, 700 Ah ≤ C ≤ 1500 Ah.

In the embodiments, the battery cell 21 is a sodium-ion battery cell, X₁ = 4, X₂ = 1, and C may be a specific value such as 700 Ah, 800 Ah, 900 Ah, 1000 Ah, 1100 Ah, 1200 Ah, 1300 Ah, 1400 Ah, 1500 Ah, or a range between any two of these values.

In some embodiments, X₁ = 4, X₂ = 2, and 150 Ah ≤ C ≤ 1500 Ah.

In the embodiments, C may be a specific value such as 150 Ah, 200 Ah, 300 Ah, 400 Ah, 500 Ah, 600 Ah, 700 Ah, 800 Ah, 900 Ah, 1000 Ah, 1100 Ah, 1200 Ah, 1300 Ah, 1400 Ah, 1500 Ah, or a range between any two of these values.

When the battery cell 21 is a sodium-ion battery cell, and X₁ = 4, X₂ = 2, setting the capacity of the battery cell 21 within the range of 150 Ah to 1500 Ah satisfies both the power matching requirements and the voltage requirements of the energy storage apparatus 10.

In some embodiments, 350 Ah ≤ C ≤ 1200 Ah.

In the embodiments, the battery cell 21 is a sodium-ion battery cell, X₁ = 4, X₂ = 2, and C may be a specific value such as 350 Ah, 400 Ah, 450 Ah, 500 Ah, 550 Ah, 600 Ah, 650 Ah, 700 Ah, 750 Ah, 800 Ah, 850 Ah, 900 Ah, 950 Ah, 1000 Ah, 1050Ah, 1100 Ah, 1200 Ah, or a range between any two of these values.

In some embodiments, 400 Ah ≤ C ≤ 650 Ah.

In the embodiments, the battery cell 21 is a sodium-ion battery cell, X₁ = 4, X₂ = 2, and C may be a specific value such as 400 Ah, 420 Ah, 450 Ah, 470 Ah, 490 Ah, 500 Ah, 506 Ah, 530 Ah, 550 Ah, 580 Ah, 600 Ah, 630 Ah, 650 Ah, or a range between any two of these values.

In some embodiments, referring to FIG. 3 and FIG. 8, X₁ first battery packs 2a are arranged along the length direction X of the enclosure.

In the embodiments, the battery compartment 11 accommodates N₁ batteries 2, the N₁ batteries 2 are formed by X₁ first battery packs 2a connected in parallel, and each first battery pack 2a is formed by Y₁ batteries 2 connected in series. As an example, 2 ≤ X₁ ≤ 6.

It should be noted that whether the battery cell 21 is a sodium-ion battery 2, or the positive electrode material of the battery cell 21 includes lithium-containing phosphate, or the positive electrode material of the battery cell 21 includes lithium transition metal oxide, X₁ first battery packs 2a may be arranged along the length direction X of the enclosure.

In the embodiments, X₁ first battery packs 2a are arranged along the length direction X of the enclosure, and if X is set between 2 and 6, the space of the battery compartment 11 along the length direction X of the enclosure can be fully utilized, providing a reasonable layout that facilitates improved space utilization of the battery compartment 11.

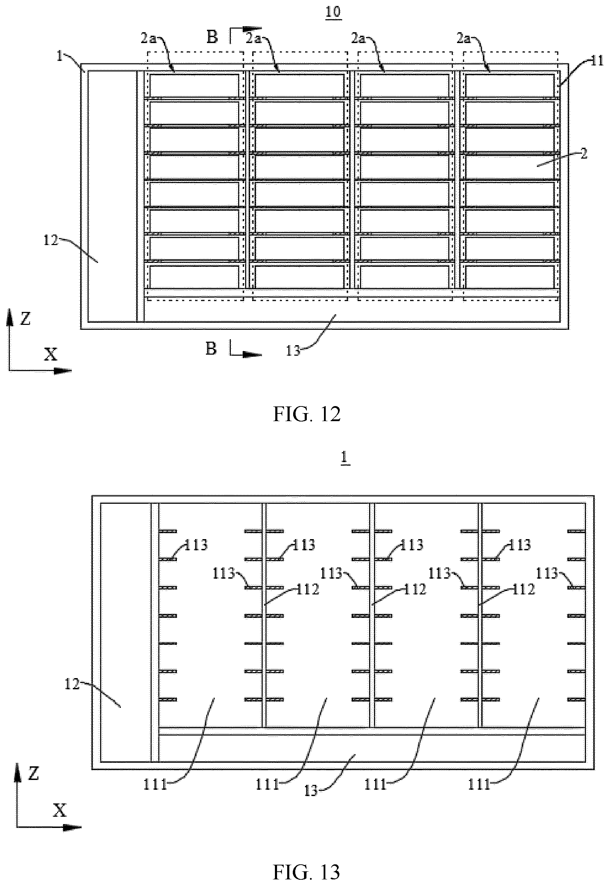

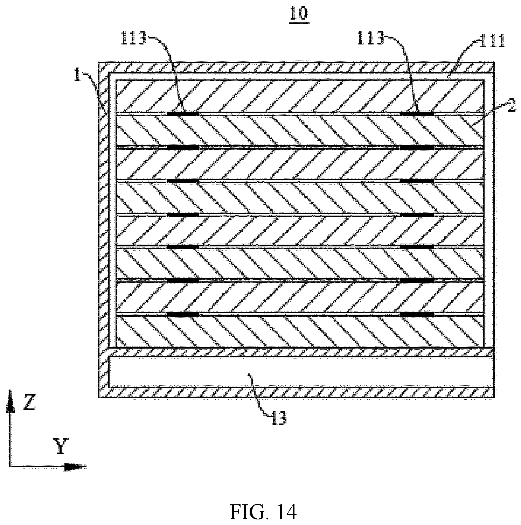

In some embodiments, referring to FIG. 12 to FIG. 14, FIG. 12 is a schematic structural diagram of an energy storage apparatus 10 provided by some other embodiments of this application; FIG. 13 is a schematic structural diagram of the enclosure 1 shown in FIG. 12; and FIG. 14 is a B-B sectional view of the energy storage apparatus 10 shown in FIG. 12. The battery compartment 11 includes a plurality of sub-compartments 111, the plurality of sub-compartments 111 are arranged along the length direction X of the enclosure, and along the length direction X of the enclosure, each sub-compartment 111 accommodates one first battery pack 2a.

Each first battery pack 2a in each sub-compartment 111 may also be referred to as a battery cluster, and the number of battery clusters may be equal to the number of sub-compartments 111. During installation, Y₁ batteries 2 may be accommodated in the sub-compartment 111 and connected in series to form a corresponding first battery pack 2a.

The sub-compartments 111 may be two, three, four, five, six, or more. Two adjacent sub-compartments 111 may be separated by a partition 112. The partition 112 may be a partition plate disposed between the two sub-compartments 111 or a partition beam disposed between the two sub-compartments 111, and the partition beam may extend along the height direction Z of the enclosure. When the partition 112 is a partition beam disposed between two adjacent sub-compartments 111, a plurality of partition beams may be provided between the two adjacent sub-compartments 111, and the plurality of partition beams may be spaced apart along the width direction Y of the enclosure.

The sub-compartments 111 may have various shapes, such as cylindrical or prismatic. The prism may be a triangular prism, quadrangular prism, pentagonal prism, hexagonal prism, or the like. Along the length direction X of the enclosure, the sub-compartment 111 may accommodate one battery 2 or a plurality of batteries 2; along the height direction Z of the enclosure, the sub-compartment 111 may accommodate one battery 2 or a plurality of batteries 2; and along the width direction of the enclosure 1, the sub-compartment 111 may accommodate one battery 2 or a plurality of batteries 2.

In the embodiments, dividing the battery compartment 11 into a plurality of sub-compartments 111, each capable of accommodating a first battery pack 2a, allows the first battery packs 2a to be accommodated in the battery compartment 11 more regularly, facilitating easier installation of batteries 2 in the first battery packs 2a.

In some embodiments, continuing to refer to FIG. 12 to FIG. 14, along the height direction Z of the enclosure, the battery compartment 11 accommodates only one first battery pack 2a, and Y₁ batteries 2 in each first battery pack 2a are arranged along the height direction Z of the enclosure, 2 ≤ Y₁ ≤ 10.

Y₁ may be 2, 3, 4, 5, 6, 7, 8, 9, or 10.

It can be understood that all batteries 2 in the first battery pack 2a are arranged along the height direction Z of the enclosure. In an embodiment where the sub-compartment 111 accommodates only one first battery pack 2a, it can be understood that along the height direction Z of the enclosure, the sub-compartment 111 accommodates a plurality of batteries 2, and the plurality of batteries 2 are connected in series. As an example, along the width direction Y of the enclosure, the sub-compartment 111 accommodates only one battery 2; along the length direction X of the enclosure, the sub-compartment 111 accommodates only one battery 2.

As an example, along the length direction X of the enclosure, support members 113 are provided on two sides of each sub-compartment 111. Along the height direction Z of the enclosure, the support members 113 are located at the bottom of the battery 2. The support members 113 are configured to support the battery 2. The support members 113 may be installed on the wall of the battery compartment 11 and the partition 112. The provision of the support members 113 enhances the stability of each battery 2 within the sub-compartment 111, and in addition, maintains a certain distance between two adjacent batteries 2 along the height direction Z of the enclosure within the sub-compartment 111, reducing the impact on adjacent batteries 2 during the assembly or disassembly of one battery 2.

In an embodiment where the enclosure 1 includes an electrical compartment 14 and a main control compartment 13, the main control unit in the main control compartment 13 can achieve high-voltage control and communication for the first battery pack 2a (battery cluster), and the bus unit in the electrical compartment 14 can achieve parallel current collection of a plurality of first battery packs 2a, achieving a safe connection between the plurality of first battery packs 2a and the direct current side of the power conversion system 20.

In the embodiments, all batteries 2 in the first battery pack 2a are arranged along the height direction Z of the enclosure, facilitating the series connection of all batteries 2 in the first battery pack 2a. Setting Y₁ between 2 and 10 ensures that Y₁ is not excessively large. The number of batteries 2 arranged along the height direction Z of the enclosure in the battery compartment 11 is not excessive, facilitating improved space utilization of the battery compartment 11.

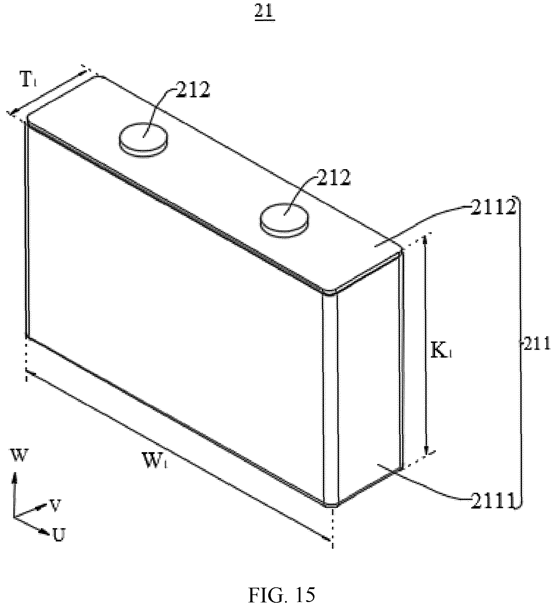

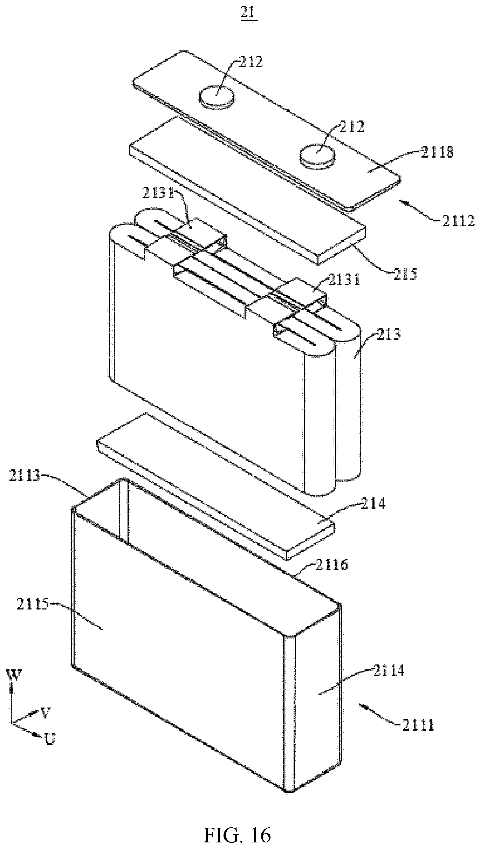

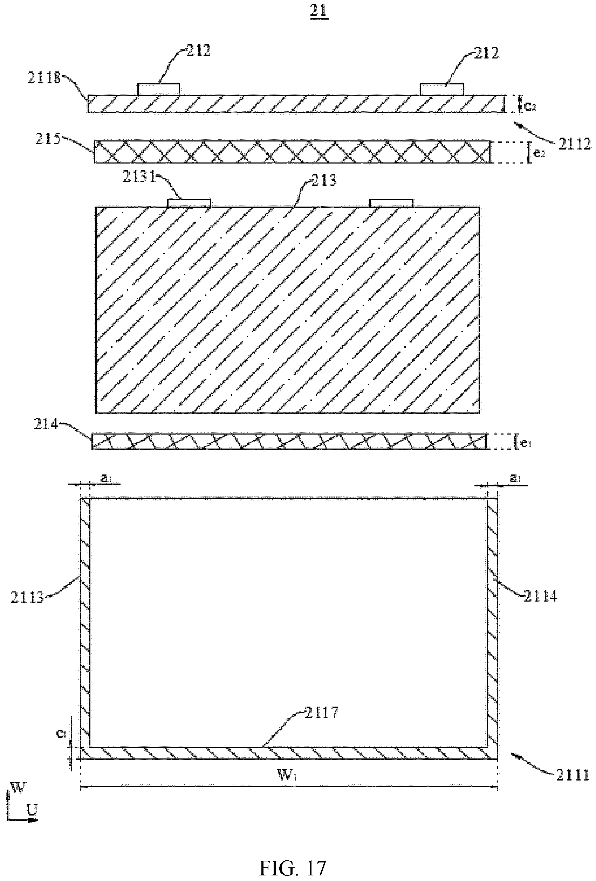

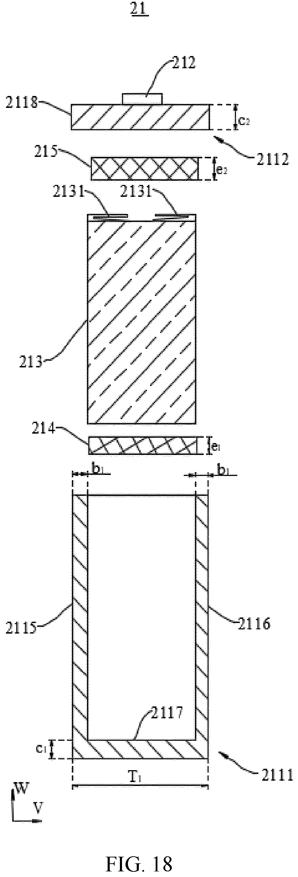

In some embodiments, referring to FIG. 15 to FIG. 18, FIG. 15 is an axonometric view of a battery cell 21 according to some embodiments of this application; FIG. 16 is an exploded view of the battery cell 21 shown in FIG. 15; FIG. 17 is an exploded sectional view of the battery cell 21 shown in FIG. 15 taken along the UW plane; and FIG. 18 is an exploded sectional view of the battery cell 21 shown in FIG. 15 taken along the VW plane. An embodiment of this application also provides a battery cell 21, the battery cell 21 includes a housing 211 and at least one electrode assembly 213, and the electrode assembly 213 is accommodated within the housing 211. The housing 211 has a cuboid shape, a dimension of the housing 211 in a first direction U is W₁, a dimension of the housing 211 in a second direction V is T₁, a dimension of the housing 211 in a third direction W is Ki, one of the first direction U, the second direction V, and the third direction W is parallel to the length direction X of the enclosure, another is parallel to the width direction Y of the enclosure, and yet another is parallel to the height direction Z of the enclosure. The housing 211 includes a first wall 2113 and a second wall 2114 oppositely disposed along the first direction U, a third wall 2115 and a fourth wall 2116 oppositely disposed along the second direction V, and a fifth wall 2117 and a sixth wall 2118 oppositely disposed along the third direction W. A sum of thicknesses of the first wall 2113 and the second wall 2114 is a, a sum of thicknesses of the third wall 2115 and the fourth wall 2116 is b, a sum of thicknesses of the fifth wall 2117 and the sixth wall 2118 is c, satisfying: (W₁ - a) * (T₁ - b) * (K₁ - c) / (W₁ * T₁ * K₁) ≥ 90%.

The number of electrode assemblies 213 within the housing 211 may be one or more. If the housing 211 contains a plurality of electrode assemblies 213, the plurality of electrode assemblies 213 may be connected in parallel.

The housing 211 has a cuboid shape, and the cuboid may be a rectangular cuboid, a square cuboid, or the like. Among the six walls of the housing 211, four walls may form the housing 211 with the other two walls being end caps 2112, or five walls may form the housing 211 with the other wall being an end cap 2112. The dimension of the housing 211 in the first direction U, the dimension of the housing 211 in the second direction V, the dimension of the housing 211 in the third direction W, the thickness of the first wall 2113, the thickness of the second wall 2114, the thickness of the third wall 2115, the thickness of the fourth wall 2116, the thickness of the fifth wall 2117, and the thickness of the sixth wall 2118 can all be measured using a vernier caliper.

As an example, the first wall 2113, the second wall 2114, the third wall 2115, the fourth wall 2116, the fifth wall 2117, and the sixth wall 2118 are all made of aluminum alloy. The aluminum alloy includes the following mass percentage components: aluminum ≥ 96.7%, 0.05% ≤ copper ≤ 0.2%, iron ≤ 0.7%, manganese ≤ 1.5%, silicon ≤ 0.6%, zinc ≤ 0.1%, other individual elements ≤ 0.05%, and total other elements ≤ 0.15%.

As an example, the first direction U is the length direction of the housing 211 of the battery cell 21, the second direction V is the width direction of the housing 211 of the battery cell 21, and the third direction W is the height direction of the housing 211 of the battery cell 21. It can be understood that W₁ is the length of the housing 211 of the battery cell 21, T₁ is the width of the housing 211 of the battery cell 21, and Ki is the height of the housing 211 of the battery cell 21.

(W₁ - a) * (T₁ - b) * (K₁ - c) / (W₁ * T₁ * K₁) may be a specific value such as 90%, 90.5%, 91%, 91.5%, 92%, 92.5%, 93%, 93.5%, 94%, 94.5%, 95%, 95.5%, 96%, 96.5%, 97%, 97.5%, 98%, 98.5%, 99%, 99.5%, or a range between any two of these values.

Here, (W₁ - a) * (T₁ - b) * (K₁ - c) can be understood as the volume of the internal space of the housing 211, that is, the volume of the space enclosed by the inner surfaces of the housing 211. W₁ * T₁ * K₁ is the volume of the housing 211.

If the outer surfaces of all six walls of the housing 211 are flat, W₁, T₁, and K₁ are measured based on the outer surfaces of the respective walls. For example, if the outer surfaces of the fifth wall 2117 and the sixth wall 2118 are both flat, Ki is a distance between the outer surface of the fifth wall 2117 and the outer surface of the sixth wall 2118 along the third direction W.

If the outer surface of a certain wall of the housing 211 has a protrusion or recess, W₁, T₁, and K₁ are measured based on a flat region of the outer surface (that is, a region excluding the protrusion or recess). For example, if the outer surface of the fifth wall 2117 is flat and the outer surface of the sixth wall 2118 has a first protrusion (for example, the sixth wall 2118 is an end cap 2112, and the protrusion formed on the end cap 2112 is the first protrusion), Ki is the distance along the third direction W between the flat region of the outer surface of the sixth wall 2118 excluding the first protrusion and the outer surface of the fifth wall 2117. If the outer surface of the sixth wall 2118 has a first protrusion and the outer surface of the fifth wall 2117 has a second protrusion, Ki is the distance along the third direction W between the flat region of the outer surface of the fifth wall 2117 excluding the second protrusion and the flat region of the outer surface of the sixth wall 2118 excluding the first protrusion.

If all six walls of the housing 211 are walls of uniform thickness, the distance between the outer surface and the inner surface of each wall can be measured at any position of a wall to obtain the thickness of that wall. If a certain wall of the housing 211 is a wall of non-uniform thickness, the distance between the outer surface and the inner surface of that wall is measured at the position of maximum thickness to obtain the thickness of that wall. In other words, if the thickness of a certain wall is non-uniform, the maximum thickness of that wall is used to calculate a, b, or c.

In such a battery cell 21, the ratio of the volume of the internal space of the housing 211 of the battery cell 21 to the volume of the housing 211 is 90% or more, so that the internal space of the housing 211 is relatively large, the space available in the housing 211 to accommodate the electrode assembly 213 is increased, and under the same chemical system, the volumetric energy density of the battery cell 21 can be improved.

The following provides a detailed explanation through specific experimental data.

In the experiment, the battery cell 21 was a prismatic battery cell 21, the shell 2111 of the housing 211 was a hollow structure with an opening at one end, and the battery cell 21 included one end cap 2112.

**Table 2**

| No. | W₁ (mm) | T₁ (mm) | K₁ (mm) | a (mm) | b (mm) | c (mm) | Battery cell chemical system | (W₁ - a) (T₁ - b) (K₁ - c) / (W₁ * T₁ * K₁) | Volumetric energy density of the battery cell (Ah/L) |
|---|---|---|---|---|---|---|---|---|---|
| Example 10 | 800 | 100 | 51.9 | 1.2 | 1.6 | 4 | lithium-containing phosphate | 91% | 118 |
| Example 11 | 690 | 100 | 60.2 | 1.2 | 1.6 | 4 | lithium-containing phosphate | 92% | 119.3 |
| Example 12 | 580 | 100 | 71.6 | 1.2 | 1.6 | 4 | lithium-containing phosphate | 93% | 120.6 |
| Example 13 | 470 | 100 | 88.4 | 1.2 | 1.6 | 4 | lithium-containing phosphate | 94% | 121.9 |
| Example 14 | 690 | 100 | 48.9 | 1.6 | 2 | 4 | lithium transition metal oxide | 90% | 190.1 |
| Example 15 | 610 | 100 | 55.4 | 1.6 | 2 | 4 | lithium transition metal oxide | 91% | 192.2 |
| Example 16 | 520 | 100 | 65 | 1.6 | 2 | 4 | lithium transition metal oxide | 92% | 194.3 |
| Example 17 | 430 | 100 | 78.5 | 1.6 | 2 | 4 | lithium transition metal oxide | 93% | 196.4 |
| Example 18 | 760 | 90 | 49.4 | 1.6 | 2 | 4 | sodium-ion battery cell | 90% | 87 |
| Example 19 | *660* | 90 | *56.8* | 1.6 | 2 | 4 | sodium-ion battery cell | 91% | 88 |
| Example 20 | 560 | 90 | 67 | 1.6 | 2 | 4 | sodium-ion battery cell | 92% | 88.9 |
| Example 21 | 460 | 90 | 81.5 | 1.6 | 2 | 4 | sodium-ion battery cell | 93% | 89.9 |
| Comparative Example 2 | 1120 | 100 | 37.1 | 1.2 | 1.6 | 4 | lithium-containing phosphate | 88% | 115.3 |
| Comparative Example 3 | 870 | 100 | 38.5 | 1.6 | 2 | 4 | lithium transition metal oxide | 88% | 185.8 |
| Comparative Example 4 | 960 | 90 | 39.1 | 1.6 | 2 | 4 | sodium-ion battery cell | 88% | 85.1 |

According to Table 2 above, by comparing Examples 10 to 13 with Comparative Example 2, it can be seen that when the positive electrode material of the battery cell 21 includes lithium-containing phosphate, (W₁ - a) * (T₁ - b) * (K₁ - c) / (W₁ * T₁ * K₁) ≥ 90%, which enables the volumetric energy density of the battery cell 21 to be effectively improved; by comparing Examples 14 to 17 with Comparative Example 3, it can be seen that when the positive electrode material of the battery cell 21 includes lithium transition metal oxide, (W₁ - a) * (T₁ - b) * (K₁ - c) / (W₁ * T₁ * K₁) ≥ 90%, which enables the volumetric energy density of the battery cell 21 to be effectively improved; and by comparing Examples 18 to 21 with Comparative Example 4, it can be seen that when the battery cell 21 is a sodium-ion battery cell, (W₁ - a) * (T₁ - b) * (K₁ - c) / (W₁ * T₁ * K₁) ≥ 90%, which enables the volumetric energy density of the battery cell 21 to be effectively improved.

In some embodiments, (W₁ - a) / W₁ ≥ 97.0%, (T₁ b) / T₁ ≥ 96.5%, and (K₁ - c) / K₁ ≥ 96.5%.

Setting the ratio of W₁ - a to W₁ at 97.0% or higher ensures that, with the length of the battery cell 21 unchanged, the length of the internal space of the housing 211 increases, allowing accommodation of a longer electrode assembly 213; and that under the same chemical material system, the volumetric energy density of the battery cell 21 can be increased. (W₁ - a) / W₁ may be a specific value such as 97%, 97.5%, 98%, 98.5%, 99%, 99.5%, or a range between any two of these values.

Setting the ratio of T₁ - b to T₁ at 96.5% or higher ensures that, with the width of the battery cell 21 unchanged, the width of the internal space of the housing 211 increases, allowing accommodation of a wider electrode assembly 213; and that under the same chemical material system, the volumetric energy density of the battery cell 21 can be increased. (T₁ - b) / T₁ may be a specific value such as 96.5%, 97%, 97.5%, 98%, 98.5%, 99%, 99.5%, or a range between any two of these values.

Setting the ratio of Ki - c to Ki at 96.5% or higher ensures that, with the height of the battery cell 21 unchanged, the height of the internal space of the housing 211 increases, allowing accommodation of a taller electrode assembly 213; and that under the same chemical material system, the volumetric energy density of the battery cell 21 can be increased. (K₁ - c) / Ki may be a specific value such as 96.5%, 97%, 97.5%, 98%, 98.5%, 99%, 99.5%, or a range between any two of these values.

In some embodiments, continuing to refer to FIG. 15 to FIG. 18, the housing 211 includes a shell 2111 and an end cap 2112, the shell 2111 has an opening, and the end cap 2112 covers the opening. The shell 2111 includes the first wall 2113, the second wall 2114, the third wall 2115, the fourth wall 2116, and the fifth wall 2117 integrally formed, and the end cap 2112 is the sixth wall 2118.

In the embodiments, the shell 2111 is a hollow structure with an opening formed at one end, and the housing 211 includes one end cap 2112. The end cap 2112 is separately provided and connected to the shell 2111, and the end cap 2112 and the shell 2111 may be connected by welding or crimping.

In assembling the battery 2, the electrode terminals 212 can first be installed on the end cap 2112, the electrode assembly 213 can then be accommodated in the shell 2111, and the end cap 2112 can subsequently cover the opening of the shell 2111, reducing the difficulty of installing the electrode assembly 213 into the housing 211 and the difficulty of installing the electrode terminals 212 onto the housing 211.

In some embodiments, continuing to refer to FIG. 17 and FIG. 18, the thickness of the first wall 2113 and the thickness of the second wall 2114 are both ai, and 2 * a₁ = a; the thickness of the third wall 2115 and the thickness of the fourth wall 2116 are both bi, and 2 * b₁ = b; and the thickness of the fifth wall 2117 is c₁, and the thickness of the sixth wall 2118 is c₂, c₂ > c₁, c₁ > a₁, and c₁ > b₁, where 0.5 mm ≤ a₁ ≤ 1.5 mm, 0.5 ≤ b₁ ≤ 1.5 mm, 1.0 mm ≤ c₁ ≤ 2.5 mm, 1.5 mm ≤ c₂ ≤ 4 mm.

To reduce the possibility of interference between the electrode assembly 213 and the shell 2111 during the process of loading the electrode assembly 213 into the shell 2111 and to lower the risk of damage to the electrode assembly 213, a certain assembly clearance (that is, loading clearance) is reserved for the electrode assembly 213 when designing the shell 2111, and this assembly clearance may be 0.8 mm to 2 mm.

In addition, to reduce the possibility of an internal short circuit in the battery cell 21, insulating members may be provided inside the housing 211, but the insulating members inevitably occupy a portion of the internal space of the housing 211, thereby reducing the space available for the electrode assembly 213 and the electrolyte.

In some embodiments, the battery cell 21 may further include a first insulating member 214 and a second insulating member 215, the first insulating member 214 is disposed between the fifth wall 2117 and the electrode assembly 213 and abuts the fifth wall 2117, and the second insulating member 215 is disposed between the sixth wall 2118 and the electrode assembly 213 and abuts the sixth wall 2118; and a maximum dimension of the first insulating member 214 in the third direction W is e₁, and a maximum dimension of the second insulating member 215 in the third direction W is e₂, satisfying: (W₁ - a - 1.6 mm) * (T₁ - b - 1.6 mm) * (Ki - c - e₁ - e₂) / (W₁ * T₁ * K₁) ≥ 88%, 0.3 mm ≤ e₁ ≤ 1.2 mm, and 2 mm ≤ e₂ ≤ 10 mm.

(W₁ - a - 1.6 mm) * (T₁ - b - 1.6 mm) * (K₁ - c - e₁ - e₂) / (W₁ * T₁ * Ki) may be a specific value such as 88%, 89%, 90%, 91%, 92%, 93%, 94%, 95%, 96%, 97%, 98%, 99%, or a range between any two of these values.

e₁ may be a specific value such as 0.3 mm, 0.4 mm, 0.5 mm, 0.6 mm, 0.7 mm, 0.8 mm, 0.9 mm, 1 mm, 1.1 mm, 1.2 mm, or a range between any two of these values.

e₂ may be a specific value such as 2 mm, 3 mm, 4 mm, 5 mm, 6 mm, 7 mm, 8 mm, 9 mm, 10 mm, or a range between any two of these values.

In the embodiments, W₁ - a - 1.6 mm indicates the maximum dimension of the internal space of the housing 211 available for the electrode assembly 213 along the first direction U, given a 0.8 mm assembly clearance between the electrode assembly 213 and the shell 2111. T₁ - b - 1.6 mm indicates the maximum dimension of the internal space of the housing 211 available for the electrode assembly 213 along the second direction V, given a 0.8 mm assembly clearance between the electrode assembly 213 and the shell 2111. K₁ - c - e₁ - e₂ indicates the maximum dimension of the internal space of the housing 211 available for the electrode assembly 213 along the third direction W, given that a first insulating member 214 abutting the fifth wall 2117 is disposed between the fifth wall 2117 and the electrode assembly 213, and a second insulating member 215 abutting the sixth wall 2118 is disposed between the sixth wall 2118 and the electrode assembly 213. The first insulating member 214 may be a bottom support plate, and the second insulating member 215 may be a lower plastic piece.

In the embodiments, with (W₁ - a - 1.6 mm) * (T₁ - b - 1.6 mm) * (K₁ - c - e₁ - e₂) / (W₁ * T₁ * K₁) ≥ 88%, the space within the housing 211 available for the electrode assembly 213 is increased, allowing accommodation of a larger volume electrode assembly 213, which further increases the volumetric energy density of the battery cell 21.

In some embodiments, the battery cell 21 may further include a first insulating member 214 and a second insulating member 215, the first insulating member 214 is disposed between the fifth wall 2117 and the electrode assembly 213 and abuts the fifth wall 2117, and the second insulating member 215 is disposed between the sixth wall 2118 and the electrode assembly 213 and abuts the sixth wall 2118; and a maximum dimension of the first insulating member 214 in the third direction W is e₁, and a maximum dimension of the second insulating member 215 in the third direction W is e₂, satisfying: (W₁ - a - 4 mm) * (T₁ - b - 4 mm) * (K₁ - c - e₁ - e₂) / (W₁ * T₁ * K₁) ≥ 85%, 0.3 mm ≤ e₁ ≤ 1.2 mm, and 2 mm ≤ e₂ ≤ 10 mm.

(W₁ - a - 4 mm) * (T₁ - b - 4 mm) * (K₁ - c - e₁ - e₂) / (W₁ * T₁ * K₁) may be a specific value such as 85%, 86%, 87%, 88%, 89%, 90%, 91%, 92%, 93%, 94%, 95%, 96%, 97%, 98%, 99%, or a range between any two of these values.
e₁ may be a specific value such as 0.3 mm, 0.4 mm, 0.5 mm, 0.6 mm, 0.7 mm, 0.8 mm, 0.9 mm, 1 mm, 1.1 mm, 1.2 mm, or a range between any two of these values.
e₂ may be a specific value such as 2 mm, 3 mm, 4 mm, 5 mm, 6 mm, 7 mm, 8 mm, 9 mm, 10 mm, or a range between any two of these values.

In the embodiments, W₁ - a - 4 mm indicates the maximum dimension of the internal space of the housing 211 available for the electrode assembly 213 along the first direction U, given a 2 mm assembly clearance between the electrode assembly 213 and the shell 2111. T₁ - b - 4 mm indicates the maximum dimension of the internal space of the housing 211 available for the electrode assembly 213 along the second direction V, given a 2 mm assembly clearance between the electrode assembly 213 and the shell 2111. K₁ - c - e₁ - e₂ indicates the maximum dimension of the internal space of the housing 211 available for the electrode assembly 213 along the third direction W, given that a first insulating member 214 abutting the fifth wall 2117 is disposed between the fifth wall 2117 and the electrode assembly 213, and a second insulating member 215 abutting the sixth wall 2118 is disposed between the sixth wall 2118 and the electrode assembly 213.

In the embodiments, with (W₁ - a - 4 mm) * (T₁ - b - 4 mm) * (K₁ - c - e₁ - e₂) / (W₁ * T₁ * K₁) ≥ 85%, the space within the housing 211 available for the electrode assembly 213 is increased, allowing accommodation of a larger volume electrode assembly 213, which further increases the volumetric energy density of the battery cell 21.

In some embodiments, W₁ ≥ T₁, the first direction U is parallel to the length direction X of the enclosure, the second direction V is parallel to the width direction Y of the enclosure, and the third direction W is parallel to the height direction Z of the enclosure.

As an example, the first direction U is the length direction of the housing 211 of the battery cell 21, the second direction V is the width direction of the housing 211 of the battery cell 21, and the third direction W is the height direction of the housing 211 of the battery cell 21, so that the length direction of the housing 211 is parallel to the length direction X of the enclosure, the width direction of the housing 211 is parallel to the width direction Y of the enclosure, and the height direction of the housing 211 is parallel to the height direction Z of the enclosure.

When the shell 2111 has an end cap 2112 at only one end and W₁ ≥ T₁, arranging the end cap 2112 and the fifth wall 2117 of the housing 211 oppositely along the height direction Z of the enclosure, the first wall 2113 and the second wall 2114 of the housing 211 oppositely along the length direction X of the enclosure, and the third wall 2115 and the fourth wall 2116 of the housing 211 oppositely along the width direction Y of the enclosure facilitates increasing the volume proportion of all battery cells 21 in the battery compartment 11.

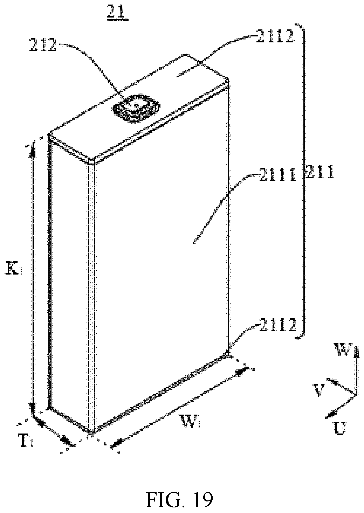

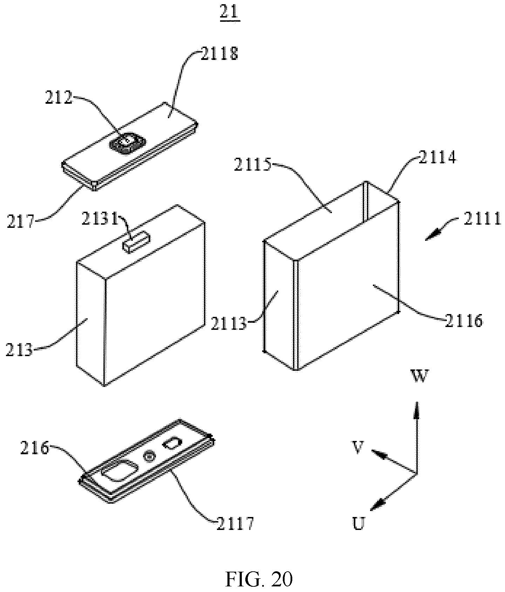

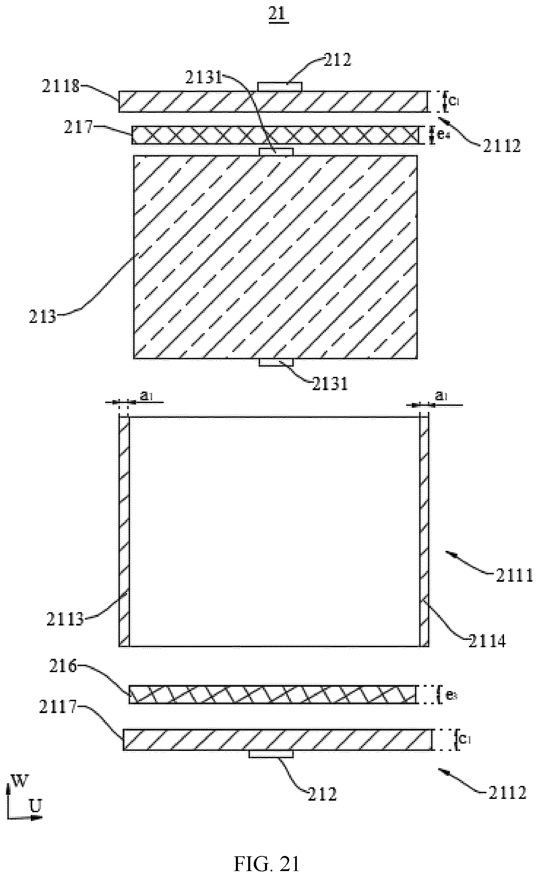

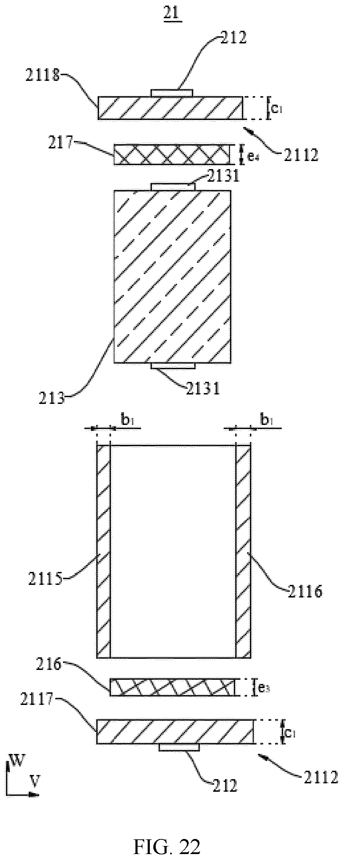

In some embodiments, referring to FIG. 19 to FIG. 22, FIG. 19 is an axonometric view of a battery cell 21 according to some other embodiments of this application; FIG. 20 is an exploded view of the battery cell 21 shown in FIG. 19; FIG. 21 is an exploded sectional view of the battery cell 21 shown in FIG. 19 taken along the UW plane; and FIG. 22 is an exploded sectional view of the battery cell 21 shown in FIG. 19 taken along the VW plane. The housing 211 includes a shell 2111 and two end caps 2112, the shell 2111 has two openings oppositely disposed along the third direction W, and the two end caps 2112 respectively cover the two openings; and the shell 2111 includes the first wall 2113, the second wall 2114, the third wall 2115, and the fourth wall 2116 integrally formed, and the two end caps 2112 are the fifth wall 2117 and the sixth wall 2118, respectively.

In the embodiments, the shell 2111 is a hollow structure with openings formed at two ends, and the housing 211 includes two end caps 2112, the two end caps 2112 respectively closing the openings at two ends of the shell 2111.

In some embodiments, continuing to refer to FIG. 21 and FIG. 22, the thickness of the first wall 2113 and the thickness of the second wall 2114 are both ai, and 2 * a₁ = a; the thickness of the third wall 2115 and the thickness of the fourth wall 2116 are both bi, and 2 * bi = b; and the thickness of the fifth wall 2117 and the thickness of the sixth wall 2118 are c₁, 2 * c₁ = c, c₁ > a₁, and c₁ > b₁, where 0.5 mm ≤ a₁ ≤ 1.5 mm, 0.5 ≤ b₁ ≤ 1.5 mm, 1.0 mm ≤ c₁ ≤ 4 mm.

To reduce the possibility of interference between the electrode assembly 213 and the shell 2111 during the process of loading the electrode assembly 213 into the shell 2111 and to lower the risk of damage to the electrode assembly 213, a certain assembly clearance (that is, loading clearance) is reserved for the electrode assembly 213 when designing the shell 2111, and this assembly clearance may be 0.8 mm to 2 mm.

In addition, to reduce the possibility of an internal short circuit in the battery cell 21, insulating members may be provided inside the housing 211, but the insulating members inevitably occupy a portion of the internal space of the housing 211, thereby reducing the space available for the electrode assembly 213 and the electrolyte.

In some embodiments, the battery cell 21 may further include a third insulating member 216 and a fourth insulating member 217, the third insulating member 216 is disposed between the fifth wall 2117 and the electrode assembly 213 and abuts the fifth wall 2117, and the fourth insulating member 217 is disposed between the sixth wall 2118 and the electrode assembly 213 and abuts the sixth wall 2118, and a maximum dimension of the third insulating member 216 in the third direction W is e₃, and a maximum dimension of the fourth insulating member 217 in the third direction W is e₄, satisfying: (W₁ - a - 1.6 mm) * (T₁ - b - 1.6 mm) * (K₁ - c - e₃ - e₄) / (W₁ * T₁ * K₁) ≥ 88%, 2 mm ≤ e₃ ≤ 10 mm, and 2 mm ≤ e₄ ≤ 10 mm.

(W₁ - a - 1.6 mm) * (T₁ - b - 1.6 mm) * (K₁ - c - e₃ - e₄) / (W₁ * T₁ * K₁) may be a specific value such as 88%, 89%, 90%, 91%, 92%, 93%, 94%, 95%, 96%, 97%, 98%, 99%, or a range between any two of these values.
e₃ may be a specific value such as 2 mm, 3 mm, 4 mm, 5 mm, 6 mm, 7 mm, 8 mm, 9 mm, 10 mm, or a range between any two of these values.
e₄ may be a specific value such as 2 mm, 3 mm, 4 mm, 5 mm, 6 mm, 7 mm, 8 mm, 9 mm, 10 mm, or a range between any two of these values.

In the embodiments, W₁ - a - 1.6 mm indicates the maximum dimension of the internal space of the housing 211 available for the electrode assembly 213 along the first direction U, given a 0.8 mm assembly clearance between the electrode assembly 213 and the shell 2111. T₁ - b - 1.6 mm indicates the maximum dimension of the internal space of the housing 211 available for the electrode assembly 213 along the second direction V, given a 0.8 mm assembly clearance between the electrode assembly 213 and the shell 2111. K₁ - c - e₃ - e₄ indicates the maximum dimension of the internal space of the housing 211 available for the electrode assembly 213 along the third direction W, given that a third insulating member 216 abutting the fifth wall 2117 is disposed between the fifth wall 2117 and the electrode assembly 213, and a fourth insulating member 217 abutting the sixth wall 2118 is disposed between the sixth wall 2118 and the electrode assembly 213. Both the third insulating member 216 and the fourth insulating member 217 may be lower plastic pieces.

In the embodiments, with (W₁ - a - 1.6 mm) * (T₁ - b - 1.6 mm) * (K₁ - c - e₃ - e₄) / (W₁ * T₁ * K₁) ≥ 88%, the space within the housing 211 available for the electrode assembly 213 is increased, allowing accommodation of a larger volume electrode assembly 213, which further increases the volumetric energy density of the battery cell 21.

In some embodiments, the battery cell 21 may further include a third insulating member 216 and a fourth insulating member 217, the third insulating member 216 is disposed between the fifth wall 2117 and the electrode assembly 213 and abuts the fifth wall 2117, and the fourth insulating member 217 is disposed between the sixth wall 2118 and the electrode assembly 213 and abuts the sixth wall 2118, and a maximum dimension of the third insulating member 216 in the third direction W is e₃, and a maximum dimension of the fourth insulating member 217 in the third direction W is e₄, satisfying: (W₁ - a - 4 mm) * (T₁ - b - 4 mm) * (K₁ - c -e₃ - e₄) / (W₁ * T₁ * K₁) ≥ 85%, 2 mm ≤ e₃ ≤ 10 mm, and 2 mm ≤ e₄ ≤ 10 mm.

W₁ - a - 4 mm) * (T₁ - b - 4 mm) * (K₁ - c - e₃ - e₄) / (W₁ * T₁ * K₁) may be a specific value such as 85%, 86%, 87%, 88%, 89%, 90%, 91%, 92%, 93%, 94%, 95%, 96%, 97%, 98%, 99%, or a range between any two of these values.
e₃ may be a specific value such as 2 mm, 3 mm, 4 mm, 5 mm, 6 mm, 7 mm, 8 mm, 9 mm, 10 mm, or a range between any two of these values.
e₄ may be a specific value such as 2 mm, 3 mm, 4 mm, 5 mm, 6 mm, 7 mm, 8 mm, 9 mm, 10 mm, or a range between any two of these values.

In the embodiments, W₁ - a - 4 mm indicates the maximum dimension of the internal space of the housing 211 available for the electrode assembly 213 along the first direction U, given a 2 mm assembly clearance between the electrode assembly 213 and the shell 2111. T₁ - b - 4 mm indicates the maximum dimension of the internal space of the housing 211 available for the electrode assembly 213 along the second direction V, given a 2 mm assembly clearance between the electrode assembly 213 and the shell 2111. K₁ - c - e₃ - e₄ indicates the maximum dimension of the internal space of the housing 211 available for the electrode assembly 213 along the third direction W, given that a third insulating member 216 abutting the fifth wall 2117 is disposed between the fifth wall 2117 and the electrode assembly 213, and a fourth insulating member 217 abutting the sixth wall 2118 is disposed between the sixth wall 2118 and the electrode assembly 213.

In the embodiments, with (W₁ - a - 4 mm) * (T₁ - b - 4 mm) * (K₁ - c - e₃ - e₄) / (W₁ * T₁ * K₁) ≥ 85%, the space within the housing 211 available for the electrode assembly 213 is increased, allowing accommodation of a larger volume electrode assembly 213, which further increases the volumetric energy density of the battery cell 21.

In some embodiments, W₁ ≥ T₁, the first direction U is parallel to the height direction Z of the enclosure, the second direction V is parallel to the width direction Y of the enclosure, and the third direction W is parallel to the length direction X of the enclosure.

As an example, the first direction U is the length direction of the housing 211 of the battery cell 21, the second direction V is the width direction of the housing 211 of the battery cell 21, and the third direction W is the height direction of the housing 211 of the battery cell 21, so that the length direction of the housing 211 is parallel to the height direction Z of the enclosure, the width direction of the housing 211 is parallel to the width direction Y of the enclosure, and the height direction of the housing 211 is parallel to the length direction X of the enclosure.

When end caps 2112 are provided at two ends of the shell 2111 and W₁ ≥ T₁, arranging the two end caps 2112 of the housing 211 along the length direction X of the enclosure, the first wall 2113 and the second wall 2114 of the housing 211 along the height direction Z of the enclosure, and the third wall 2115 and the fourth wall 2116 of the housing 211 oppositely along the width direction Y of the enclosure facilitates increasing the volume proportion of all battery cells 21 in the battery compartment 11.

In some embodiments, 3000 cm³ ≤ W₁ * T₁ * K₁ ≤ 40000 cm³.

W₁ * T₁ * K₁ may be a specific value such as 3000 cm³, 5000 cm³, 8000 cm³, 10000 cm³, 13000 cm³, 15000 cm³, 18000 cm³, 20000 cm³, 23000 cm³, 25000 cm³, 28000 cm³, 30000 cm³, 33000 cm³, 35000 cm³, 38000 cm³, 40000 cm³, or a range between any two of these values.

In the embodiments, with W₁ * T₁ * K₁ ≥ 3000 cm³, it is ensured that, while satisfying a ratio of the volume of the internal space of the housing 211 to the volume of the housing 211 of 90% or more, the wall thickness of the housing 211 is not too small, thereby meeting the structural strength requirements of the housing 211; and with W₁ * T₁ * K₁ ≤ 40000 cm³, the capacity and current of the battery cell 21 can be controlled within an appropriate range, reducing the risk of damage to overcurrent components in the circuit.

In some embodiments, 3200 cm³ ≤ W₁ * T₁ * K₁ ≤ 32000 cm³.

In the embodiments, W₁ * T₁ * K₁ may be a specific value such as 3200 cm³, 3500 cm³, 4200 cm³, 5000 cm³, 6000 cm³, 7000 cm³, 8000 cm³, 9000 cm³, 10000 cm³, 11000 cm³, 12000 cm³, 13000 cm³, 14000 cm³, 15000 cm³, 16000 cm³, 17000 cm³, 18000 cm³, 19000 cm³, 20000 cm³, 21000 cm³, 22000 cm³, 23000 cm³, 24000 cm³, 25000 cm³, 26000 cm³, 27000 cm³, 28000 cm³, 29000 cm³, 30000 cm³, 31000 cm³, 32000 cm³, or a range between any two of these values.

In the embodiments, 3200 cm³ ≤ W₁ * T₁ * K₁ ≤ 32000 cm³. This balances the structural strength of the housing 211 and the heat generation requirements of the battery cell 21, further enhancing the structural strength of the housing 211 and reducing the risk of damage to overcurrent components in the circuit.

In some embodiments, 3720 cm³ ≤ W₁ * T₁ * K₁ ≤ 12500 cm³.

In the embodiments, W₁ * T₁ * K₁ may be a specific value such as 3720 cm³, 3900 cm³, 4200 cm³, 4600 cm³, 4800 cm³, 5000 cm³, 5200 cm³, 5800 cm³, 6000 cm³, 6200 cm³, 6800 cm³, 7000 cm³, 7200 cm³, 7800 cm³, 8000 cm³, 8200 cm³, 8800 cm³, 9000 cm³, 9200 cm³, 9800 cm³, 10000 cm³, 10200 cm³, 10800 cm³, 11000 cm³, 11200 cm³, 11800 cm³, 12000 cm³, 12500 cm³, or a range between any two of these values.

In some embodiments, 4000 cm³ ≤ W₁ * T₁ * K₁ ≤ 6000 cm³.

In the embodiments, W₁ * T₁ * K₁ may be a specific value such as 4000 cm³, 4100 cm³, 4200 cm³, 4300 cm³, 4400 cm³, 4500 cm³, 4600 cm³, 4700 cm³, 4800 cm³, 4900 cm³, 5000 cm³, 5100 cm³, 5200 cm³, 5300 cm³, 5400 cm³, 5500 cm³, 5600 cm³, 5700 cm³, 5800 cm³, 5900 cm³, 6000 cm³, or a range between any two of these values.

In some embodiments, the positive electrode material of the battery cell 21 includes lithium-containing phosphate, satisfying: C ≥ 350 Ah, and C / ((W₁ - a) * (T₁ - b) * (K₁ - c)) ≥ 118 Ah/L.

When the positive electrode material of the battery cell 21 includes lithium-containing phosphate and C ≥ 350 Ah, setting C / ((W₁ - a) * (T₁ - b) * (K₁ - c)) at 118 Ah/L or higher increases the volume proportion of the internal space of the housing 211 of the battery cell 21, facilitating the achievement of a ratio of the volume of the internal space of the housing 211 of the battery cell 21 to the volume of the housing 211 of 90% or more.

In some embodiments, the positive electrode material of the battery cell 21 includes lithium transition metal oxide, satisfying: C ≥ 650 Ah, and C / ((W₁ - a) * (T₁ - b) * (K₁ - c)) ≥ 190 Ah/L.

When the positive electrode material of the battery cell 21 includes lithium transition metal oxide and C ≥ 650 Ah, setting C / ((W₁ - a) * (T₁ - b) * (K₁ - c)) at 190 Ah/L or higher increases the volume proportion of the internal space of the housing 211 of the battery cell 21, facilitating the achievement of a ratio of the volume of the internal space of the housing 211 of the battery cell 21 to the volume of the housing 211 of 90% or more.

In some embodiments, the battery cell 21 is a sodium-ion battery cell, satisfying: C ≥ 260 Ah, and C / ((W₁ - a) * (T₁ - b) * (K₁ - c)) ≥ 87 Ah/L.

When the battery cell 21 is a sodium-ion battery cell and C ≥ 260 Ah, setting C / ((W₁ - a) * (T₁ - b) * (K₁ - c)) at 87 Ah/L or higher increases the volume proportion of the internal space of the housing 211 of the battery cell 21, facilitating the achievement of a ratio of the volume of the internal space of the housing 211 of the battery cell 21 to the volume of the housing 211 of 90% or more.

In addition, an embodiment of this application provides an energy storage system 100 including a power conversion system 20 and M energy storage apparatuses 10 provided by any of the above embodiments, where the energy storage apparatuses 10 are electrically connected to the power conversion system 20.

Here, M is a positive integer, and M may be 1, 2, 3, 4, 5, 6, 7, 8, or the like.

In some embodiments, M = 2, A = 2; or, M = 4, A = 4; or, M = 8, A = 8.

In addition, an embodiment of this application provides an energy storage apparatus 10, the energy storage apparatus 10 is configured to be electrically connected to a power conversion system 20, the power conversion system 20 is capable of cooperating with M energy storage apparatuses 10, M being a positive integer, a rated output power of the power conversion system 20 is P in units of W, an energy of the energy storage apparatus 10 is Q in units of Wh, and a duration for the energy storage apparatus 10 to discharge from a fully charged state to a fully discharged state is A in units of h. The energy storage apparatus 10 includes an enclosure 1 and a plurality of batteries 2, the enclosure 1 includes a battery compartment 11, and the plurality of batteries 2 are accommodated in the battery compartment 11. The battery 2 includes an enclosure 1 and a plurality of battery cells 21 accommodated in the enclosure 1. A capacity of the battery cell 21 is C in units of Ah, and a plateau voltage of the battery cell 21 is U₀ in units of V The battery compartment 11 accommodates N₁ batteries 2. The N₁ batteries 2 are formed by X₁ first battery packs 2a connected in parallel, and each first battery pack 2a is formed by Y₁ batteries 2 connected in series, where N₁ = X₁ * Y₁. The battery 2 includes N₂ battery cells 21. The N₂ battery cells 21 are formed by Y₂ second battery cell groups 21b connected in series, and each second battery cell group 21b is formed by X₂ battery cells 21 connected in parallel, where N₂ = X₂ * Y₂, and Q = N₁ * N₂ * C * U₀. A maximum operating voltage on a direct current side of the power conversion system 20 is U₁, and a minimum operating voltage on the direct current side of the power conversion system 20 is U₂, where U₂ < U₀ * Y₁ * Y₂ < U₁.

Here, the positive electrode material of the battery cell 21 includes lithium iron phosphate, P = 4900000 W, M = A = 4, U₁ = 1500 V, U₂ = 900 V, C = 530Ah, U₀ = 3.23, X₁ = 4, Y₁ = 8, X₂ = 2, Y₂ = 52, and P/(M * Q/A) = P/(M * X₁ *Y₁ * X₂ * Y₂ * C * U₀ /A) = 0.86.

It should be noted that, without conflict, the embodiments and the features in the embodiments in this application may be combined with each other.

The above embodiments are merely illustrative of the technical solutions of this application and are not intended to limit this application. For those skilled in the art, various modifications and changes can be made to this application. Any modifications, equivalent replacements, and improvements made without departing from the spirit and principle of this application shall fall within the protection scope of this application.

## Claims

1. An energy storage apparatus configured to be electrically connected to a power conversion system, wherein the power conversion system is capable of cooperating with M energy storage apparatuses, M being a positive integer, a rated output power of the power conversion system is P in units of W, an energy of the energy storage apparatus is Q in units of Wh, and a duration for the energy storage apparatus to discharge from a fully charged state to a fully discharged state is A in units of h, satisfying: 0.7 ≤ P/(M * Q/A) ≤ 0.99.

2. The energy storage apparatus according to claim 1, wherein 0.75 ≤ P/(M * Q/A) ≤ 0.95; optionally, 0.85 ≤ P/(M * Q/A) ≤ 0.93.

3. The energy storage apparatus according to claim 1, wherein the energy storage apparatus comprises:
an enclosure comprising a battery compartment; and
at least one battery accommodated in the battery compartment, the battery comprising at least one battery cell;
wherein a capacity of the battery cell is C in units of Ah, a plateau voltage of the battery cell is U₀ in units of V, a number of battery cells in the battery compartment is N, and Q = N * C * U₀.

4. The energy storage apparatus according to claim 3, wherein the battery compartment accommodates N₁ batteries, the N₁ batteries are formed by X₁ first battery packs connected in parallel, each first battery pack is formed by Y₁ batteries connected in series; or, the N₁ batteries are formed by Y₁ second battery packs connected in series, each second battery pack is formed by X₁ batteries connected in parallel, satisfying: N₁ ≥ 1, X₁ ≥ 1, Y₁ ≥ 1, and N₁ = X₁ * Y₁; and
the battery comprises N₂ battery cells, the N₂ battery cells are formed by X₂ first battery cell groups connected in parallel, each first battery cell group is formed by Y₂ battery cells connected in series; or, the N₂ battery cells are formed by Y₂ second battery cell groups connected in series, each second battery cell group is formed by X₂ battery cells connected in parallel, satisfying: N₂≥ 1, X₂ ≥ 1, Y₂ ≥ 1, N₂ = X₂ * Y₂, and N = N₁ * N₂;

5. The energy storage apparatus according to claim 4, wherein under the condition of charging the energy storage apparatus, a maximum operating voltage on a direct current side of the power conversion system is U₁, and a minimum operating voltage on the direct current side of the power conversion system is U₂, satisfying: U₂ < U₀ * Y₁ * Y₂ < U₁.

6. The energy storage apparatus according to claim 5, wherein the positive electrode material of the battery cell comprises lithium-containing phosphate, 2.8 V ≤ U₀ ≤ 3.6 V, and 250 ≤ Y₁ * Y₂ ≤ 468.

7. The energy storage apparatus according to claim 6, wherein the positive electrode material of the battery cell comprises lithium iron phosphate, 3.1 V ≤ U₀ ≤ 3.3 V, and 400 ≤ Y₁ * Y₂ ≤ 424.

8. The energy storage apparatus according to claim 6 or 7, wherein 3.5 * 10⁶ W ≤ P ≤ 7.5 * 10⁶ W, M = A, and 1 ≤ X₁ * X₂ ≤ 18.

9. The energy storage apparatus according to claim 8, wherein X₁ = 1.

10. The energy storage apparatus according to claim 9, wherein X₂ = 1, 2000 Ah ≤ C ≤ 11000 Ah.

11. The energy storage apparatus according to claim 10, wherein 2500 Ah ≤ C ≤ 6000 Ah.

12. The energy storage apparatus according to claim 9, wherein X₂ = 2, and 1000 Ah ≤ C ≤ 5500 Ah.

13. The energy storage apparatus according to claim 12, wherein 2000 Ah ≤ C ≤ 4000 Ah.

14. The energy storage apparatus according to claim 8, wherein 2 ≤ X₁ ≤ 6.

15. The energy storage apparatus according to claim 14, wherein X₁ = 4, X₂ = 1, and 500 Ah ≤ C ≤ 2600 Ah.

16. The energy storage apparatus according to claim 15, wherein 800 Ah ≤ C ≤ 1500 Ah.

17. The energy storage apparatus according to claim 14, wherein X₁ = 4, X₂ = 2, and 250 Ah ≤ C ≤ 1300 Ah.

18. The energy storage apparatus according to claim 17, wherein 350 Ah ≤ C ≤ 1000 Ah; optionally, 500 Ah ≤ C ≤ 700 Ah.

19. The energy storage apparatus according to any one of claims 14 to 18, wherein the X₁ first battery packs are arranged along a length direction of the enclosure.

20. The energy storage apparatus according to claim 19, wherein the battery compartment comprises a plurality of sub-compartments, the plurality of sub-compartments are arranged along the length direction of the enclosure, and along the length direction of the enclosure, each sub-compartment accommodates one first battery pack.

21. The energy storage apparatus according to claim 5, wherein a positive electrode material of the battery cell comprises lithium transition metal oxide, 2.8 V ≤ U₀ ≤ 4.35 V, and 210 ≤ Y₁ * Y₂ ≤ 530.

22. The energy storage apparatus according to claim 21, wherein 3.5 * 10⁶ W ≤ P ≤ 7.5 * 10⁶ W, M = A, and 1 ≤ X₁ X₂ ≤ 18.

23. The energy storage apparatus according to claim 22, wherein X₁ = 1.

24. The energy storage apparatus according to claim 23, wherein X₂ = 1, and 1500 Ah ≤ C ≤ 13400 Ah.

25. The energy storage apparatus according to claim 24, wherein 3000 Ah ≤ C ≤ 7000 Ah.

26. The energy storage apparatus according to claim 23, wherein X₂ = 2, 750 Ah ≤ C ≤ 6670 Ah.

27. The energy storage apparatus according to claim 26, wherein 1800 Ah ≤ C ≤ 4000 Ah.

28. The energy storage apparatus according to claim 22, wherein 2 ≤ X₁ ≤ 6.

29. The energy storage apparatus according to claim 28, wherein X₁ = 4, X₂ = 1, and 375 Ah ≤ C ≤ 3300 Ah.

30. The energy storage apparatus according to claim 29, wherein 700 Ah ≤ C ≤ 1600 Ah.

31. The energy storage apparatus according to claim 28, wherein X₁ = 4, X₂ = 2, and 200 Ah ≤ C ≤ 1600 Ah.

32. The energy storage apparatus according to claim 31, wherein 340 Ah ≤ C ≤ 1050 Ah; optionally, 490 Ah ≤ C ≤ 720 Ah.

33. The energy storage apparatus according to any one of claims 28 to 32, wherein the X₁ first battery packs are arranged along a length direction of the enclosure.

34. The energy storage apparatus according to claim 33, wherein the battery compartment comprises a plurality of sub-compartments, the plurality of sub-compartments are arranged along the length direction of the enclosure, and along the length direction of the enclosure, each sub-compartment accommodates one first battery pack.

35. The energy storage apparatus according to claim 5, wherein the battery cell is a sodium-ion battery cell, 1.5 V ≤ U₀ ≤ 4 V, and 230 ≤ Y₁ * Y₂ ≤ 1000.

36. The energy storage apparatus according to claim 35, wherein 3.5 * 10⁶ W ≤ P ≤ 7.5 * 10⁶ W, M = A, and 1 ≤ X₁ * X₂ ≤ 18.

37. The energy storage apparatus according to claim 36, wherein X₁ = 1.

38. The energy storage apparatus according to claim 37, wherein X₂ = 1, and 1200 Ah ≤ C ≤ 18000 Ah.

39. The energy storage apparatus according to claim 38, wherein 2000 Ah ≤ C ≤ 10000 Ah.

40. The energy storage apparatus according to claim 37, wherein X₂ = 2, 600 Ah ≤ C ≤ 9000 Ah.

41. The energy storage apparatus according to claim 40, wherein 1600 Ah ≤ C ≤ 4000 Ah.

42. The energy storage apparatus according to claim 36, wherein 2 ≤ X₁ ≤ 6.

43. The energy storage apparatus according to claim 42, wherein X₁ = 4, X₂ = 1, and 300 Ah ≤ C ≤ 4000 Ah.

44. The energy storage apparatus according to claim 43, wherein 700 Ah ≤ C ≤ 1500 Ah.

45. The energy storage apparatus according to claim 44, wherein X₁ = 4, X₂ = 2, and 150 Ah ≤ C ≤ 1500 Ah.

46. The energy storage apparatus according to claim 45, wherein 350 Ah ≤ C ≤ 1200 Ah; optionally, 400 Ah ≤ C ≤ 650 Ah.

47. The energy storage apparatus according to any one of claims 42 to 46, wherein the X₁ first battery packs are arranged along a length direction of the enclosure.

48. The energy storage apparatus according to claim 47, wherein the battery compartment comprises a plurality of sub-compartments, the plurality of sub-compartments are arranged along the length direction of the enclosure, and along the length direction of the enclosure, each sub-compartment accommodates one first battery pack.

49. The energy storage apparatus according to any one of claims 4 to 48, wherein along a height direction of the enclosure, the battery compartment accommodates only one first battery pack, and Y₁ batteries in each first battery pack are arranged along the height direction of the enclosure, 2 ≤ Y₁ ≤ 10.

50. The energy storage apparatus according to any one of claims 3 to 49, wherein the battery cell comprises a housing and at least one electrode assembly, and the electrode assembly is accommodated within the housing;
the housing has a cuboid shape, a dimension of the housing in a first direction is W₁, a dimension of the housing in a second direction is T₁, a dimension of the housing in a third direction is Ki, one of the first direction, the second direction, and the third direction is parallel to a length direction of the enclosure, another is parallel to a width direction of the enclosure, and yet another is parallel to a height direction of the enclosure; and
the housing comprises a first wall and a second wall oppositely disposed along the first direction, a third wall and a fourth wall oppositely disposed along the second direction, and a fifth wall and a sixth wall oppositely disposed along the third direction, a sum of thicknesses of the first wall and the second wall is a, a sum of thicknesses of the third wall and the fourth wall is b, and a sum of thicknesses of the fifth wall and the sixth wall is c, satisfying: (W₁ - a) * (T₁ - b) * (K₁ - c) / (W₁ * T₁ * K₁) ≥ 90%.

51. The energy storage apparatus according to claim 50, wherein (W₁ - a) / W₁ ≥ 97.0%, (T₁ - b) / T₁ ≥ 96.5%, and (K₁ - c) / K₁ ≥ 96.5%.

52. The energy storage apparatus according to claim 50 or 51, wherein the housing comprises a shell and an end cap, the shell has an opening, the end cap covers the opening; and
the shell comprises the first wall, the second wall, the third wall, the fourth wall, and the fifth wall integrally formed, and the end cap is the sixth wall.

53. The energy storage apparatus according to claim 52, wherein the battery cell further comprises a first insulating member and a second insulating member, the first insulating member is disposed between the fifth wall and the electrode assembly and abuts the fifth wall, and the second insulating member is disposed between the sixth wall and the electrode assembly and abuts the sixth wall; and
a maximum dimension of the first insulating member in the third direction is e₁, and a maximum dimension of the second insulating member in the third direction is e₂, satisfying: (W₁ - a - 1.6 mm) * (T₁ - b - 1.6 mm) * (K₁ - c -e₁ - e₂) / (W₁ * T₁ * K₁) ≥ 88%, 0.3 mm ≤ e₁ ≤ 1.2 mm, and 2 mm ≤ e₂ ≤ 10 mm.

54. The energy storage apparatus according to claim 52 or 53, wherein the battery cell further comprises a first insulating member and a second insulating member, the first insulating member is disposed between the fifth wall and the electrode assembly and abuts the fifth wall; the second insulating member is disposed between the sixth wall and the electrode assembly and abuts the sixth wall; and
a maximum dimension of the first insulating member in the third direction is e₁, and a maximum dimension of the second insulating member in the third direction is e₂, satisfying: (W₁ - a - 4 mm) * (T₁ - b - 4 mm) * (K₁ - c - e₁ - e₂) / (W₁ * T₁ * K₁) ≥ 85%, 0.3 mm ≤ e₁ ≤ 1.2 mm, and 2 mm ≤ e₂ ≤ 10 mm.

55. The energy storage apparatus according to any one of claims 52 to 54, wherein W₁ ≥ T₁, the first direction is parallel to the length direction of the enclosure, the second direction is parallel to the width direction of the enclosure, and the third direction is parallel to the height direction of the enclosure.

56. The energy storage apparatus according to claim 50 or 51, wherein the housing comprises a shell and two end caps, the shell has two openings oppositely disposed along the third direction, and the two end caps respectively cover the two openings; and
the shell comprises the first wall, the second wall, the third wall, and the fourth wall integrally formed, and the two end caps are the fifth wall and the sixth wall, respectively.

57. The energy storage apparatus according to claim 56, wherein the battery cell further comprises a third insulating member and a fourth insulating member, the third insulating member is disposed between the fifth wall and the electrode assembly and abuts the fifth wall, and the fourth insulating member is disposed between the sixth wall and the electrode assembly and abuts the sixth wall; and
a maximum dimension of the third insulating member in the third direction is e₃, and a maximum dimension of the fourth insulating member in the third direction is e₄, satisfying: (W₁ - a - 1.6 mm) * (T₁ - b - 1.6 mm) * (K₁ - c - e₃ - e₄) / (W₁ * T₁ * K₁) ≥ 88%, 2 mm ≤ e₃ ≤ 10 mm, and 2 mm ≤ e₄ ≤ 10 mm.

58. The energy storage apparatus according to claim 56 or 57, wherein the battery cell further comprises a third insulating member and a fourth insulating member, the third insulating member is disposed between the fifth wall and the electrode assembly and abuts the fifth wall, and the fourth insulating member is disposed between the sixth wall and the electrode assembly and abuts the sixth wall; and
a maximum dimension of the third insulating member in the third direction is e₃, and a maximum dimension of the fourth insulating member in the third direction is e₄, satisfying: (W₁ - a - 4 mm) * (T₁ - b - 4 mm) * (K₁ - c - e₃ - e₄) / (W₁ * T₁ * K₁) ≥ 85%, 2 mm ≤ e₃ ≤ 10 mm, and 2 mm ≤ e₄ ≤ 10 mm.

59. The energy storage apparatus according to any one of claims 56 to 58, wherein W₁ ≥ T₁, the first direction is parallel to the height direction of the enclosure, the second direction is parallel to the width direction of the enclosure, and the third direction is parallel to the length direction of the enclosure.

60. The energy storage apparatus according to any one of claims 50 to 59, wherein 3000 cm³ ≤ W₁ * T₁ * K₁ ≤ 40000 cm³; optionally, 3200 cm³ ≤ W₁ * T₁ * K₁ ≤ 32000 cm³; optionally, 3720 cm³ ≤ W₁ * T₁ * K₁ ≤ 12500 cm³; and optionally, 4000 cm³ ≤ W₁ * T₁ * K₁ ≤ 6000 cm³.

61. The energy storage apparatus according to any one of claims 50 to 60, wherein a positive electrode material of the battery cell comprises lithium-containing phosphate, satisfying: C ≥ 350 Ah, and C / ((W₁ - a) * (T₁ - b) * (K₁ - c)) ≥ 118 Ah/L.

62. The energy storage apparatus according to any one of claims 50 to 60, wherein a positive electrode material of the battery cell comprises lithium transition metal oxide, satisfying: C ≥ 650 Ah, and C / ((W₁ - a) * (T₁ - b) * (K₁ - c)) ≥ 190 Ah/L.

63. The energy storage apparatus according to any one of claims 50 to 60, wherein the battery cell is a sodium-ion battery cell, satisfying: C ≥ 260 Ah, and C / ((W₁ - a) * (T₁ - b) * (K₁ - c)) ≥ 87 Ah/L.

64. An energy storage system, comprising:
a power conversion system; and
M energy storage apparatuses according to any one of claims 1 to 63, the energy storage apparatuses being electrically connected to the power conversion system.

65. The energy storage system according to claim 64, wherein M = 2, A = 2; or, M = 4, A = 4; or, M = 8, A = 8.
